(19) **Europäisches Patentamt**

**European Patent Office**

**Office européen des brevets**

(11) **EP 1 074 921 A2**

(12) **EUROPEAN PATENT APPLICATION**

(43) Date of publication:
**07.02.2001 Bulletin 2001/06**

(51) Int. Cl.[7]: **G06F 17/30**

(21) Application number: **00114026.8**

(22) Date of filing: **04.07.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **09.07.1999 JP 19599599**

(71) Applicant:
**Knowledge Modeling Institute Inc.
Nakano-ku, Tokyo (JP)**

(72) Inventor: **Matsuzuki, Tadao
Suginami-ku, Tokyo (JP)**

(74) Representative:
**Reinhard - Skuhra - Weise & Partner
Postfach 44 01 51
80750 München (DE)**

(54) **Business support system and recording medium**

(57) A business support system, a business support method, and a business support data recording medium which realize a computer with a large-scale, highest-speed totalizing function are provided. A device at the calling party (5001) is connected via a network to a device at the called party (5002, 5003, 5004) and has the same data structure in its own data storage section as that in the data storage section of the called party's device. The device at the calling party is provided with transmitting means for transmitting the updated data and its storage location to the called party, when the data in its own data storage section is updated, and receiving means for replacing the data in its own data storage section with the received data, when the updated data and its storage location are received from the called party.

FIG. 13

**Description**

This invention relates to a business support system and a business support recording medium.

In recent years, the field of business has expanded on a worldwide basis. Recent developments in communication networks have enabled data transfer over a wide area. Furthermore, recent advances in computer technology have enabled effective use of data transfer.

(1) On the other hand, in the field of business, it is desirable that data items about sales performance, inventory control, and the like should be grasped quickly. With a conventional business approach, however, since each specialized field (e.g., the accounting department, sales department, or production department) manages the data in its own way, it takes an extremely long time to gather the pieces of management information.

(2) Today, computers are used in almost all types of business. Some conventional single types of business have turned into various types of multiple management. In addition, the company management has been often changed and the company structure been changed frequently.

Each time a new company is set up or the company structure is changed, computer software has to be modified or new computers have to be introduced, resulting in an enormous sum of expenses.

It is, accordingly, an object of the present invention to overcome the problem in item (1) by providing a business support system, a business support method, and a business support data recording medium which realize a computer with a large-scale, high-speed totalizing function. Furthermore, it is another object of the present invention to provide a business support system, a business support method, and a business support data recording medium which are highly reliable because the data is compensated for by another computer even if any microcomputer terminal has failed. In addition, it is still another object of the present invention to provide a business support system, a business support method, and a business support data recording medium which enable the past data to be stored immediately, even if a new microcomputer is added to a network.

Furthermore, it is an object of the present invention to overcome the problem in item (2) by providing a business support system and a business support recording medium which enable a purchased computer to be set so that it may be adapted easily to the company or organization that has been using computers. It is another object of the present invention to provide a business support method, a business support system, and a business support recording medium which enable the desired process to be performed on the data by selecting a slip or a form to be used and just entering data in it without paying attention to the description of program languages (e.g., COBOL or FORTRAN). The slips or forms that accept the data are designed to understand the meaning or contents of the input data automatically and effect processing.

Furthermore, it is an object of the present invention to provide a business support system and a business support recording medium which enable computers now in use to be set so that they may be adapted easily even when the company structure is changed or when the business affairs or the type of business is changed or added in a company or organization using the computers.

(1) The foregoing objects are accomplished by providing: a business support system comprising a device which is connected via a network to a device at the called party and has the same data structure in its own data storage section as that in the data storage section of the called party's device, wherein the device includes transmitting means for transmitting the updated data and its storage location to the called party, when the data in its own data storage section is updated, and receiving means for replacing the data in its own data storage section with the received data, when the updated data and its storage location are received from the called party.

The present invention is characterized in that blocks of functional models used in business are selected, various information transmission and reception structures (worksheets) used in the functional models are displayed, the information transmission and reception structures are used as objects into which data is actually entered, thereby enabling an information transmission and reception network for the functional models to be constructed automatically.

(2) The foregoing objects are further accomplished by providing: a business support system comprising: first display means which has the items for business functional blocks organized as units in business and displays a menu for the items of the business functional blocks by a call operation; second display means which classifies and has the items of jobs done in the organizations of the business functional blocks, the items of jobs being given names in such a manner that the job names have meanings in business and suggest their contents and further being defined as worksheets into which working data is entered, and which displays a menu for the job items included in the selected functional block, when any one of the business functional blocks displayed on the first display means is selected; third display means which displays the worksheet corresponding to the item, when any one of the job items displayed on the second display means; and interlocking control means which not only superimposes the input data on the worksheet displayed on the third display means, but also supplies the update information to the information transmission destination included in the worksheet.

This summary of the invention does not necessarily describe all necessary features so that the invention may also be a sub-combination of these described features.

The invention can be more fully understood from the following detailed description when taken in conjunction with the accompanying drawings, in which:

FIG. 1A is an explanatory diagram showing the basic structure of a cell used in the present invention;

FIG. 1B is an explanatory diagram of X-axis parameters of the cell;

FIG. 2 is an explanatory diagram of Y-axis parameters of the cell;

FIG. 3 is an explanatory diagram of Z-axis parameters of the cell;

FIG. 4 is an explanatory diagram showing a sales slip;

FIG. 5 is an explanatory diagram showing the relationship between a data access control cell, an intelligent data cell, and a display;

FIG. 6 is another explanatory diagram showing the relationship between a data access control cell and an intelligent data cell;

FIG. 7 is a diagram to help explain the transition of sales slips;

FIG. 8 is another diagram to help explain the transition of sales slips in further detail;

FIG. 9 is an explanatory diagram of cells in the direction of the G-axis related to the present invention;

FIG. 10 is an explanatory diagram showing an example of using the data in the direction of the G-axis;

FIG. 11 is an explanatory diagram showing the flow of the procedure for sales work;

FIG. 12 is an explanatory diagram showing the flow of the procedure for purchasing work;

FIG. 13 is an explanatory diagram showing a computer related to the present invention is connected to a network;

FIG. 14 is an explanatory diagram showing the important part of the internal configuration of the computer related to the present invention;

FIG. 15 is a flowchart to help explain an example of the data transmitting process in communication means related to the system of the present invention;

FIG. 16 is a flowchart to help explain an example of the receiving process in the communication means;

FIG. 17 shows another embodiment of the method of gathering sales slips;

FIG. 18 shows cells related to the present invention arranged in the direction of the G-axis, helping explain another example of using the system of the present invention;

FIG. 19 shows a control section for cells related to the present invention, helping explain the operation of the control section;

FIG. 20 is an explanatory diagram showing the flow of initial setting the user does when purchasing a computer terminal related to the present invention;

FIGS. 21A and 21B show examples of display screens in forming an employees' ledger on a computer terminal related to the present invention;

FIG. 22 shows an example of a display screen in forming a detailed statement of salary on the computer terminal related to the present invention;

FIG. 23 is an explanatory diagram showing an example of the data structure of the employees' ledger on the computer terminal according to the present invention;

FIG. 24 is an explanatory diagram to help explain an example of the operation of correlating the employees' ledger with the detailed statement of salary on the computer terminal according to the present invention;

FIG. 25 is an explanatory diagram showing an example of the data structure of the detailed statement of salary on the computer terminal according to the present invention;

FIG. 26 is an explanatory diagram showing an example of the data structure of a salary ledger for each employee in accounting on the computer terminal according to the present invention;

FIG. 27 is a diagram to help explain an example of the procedure for processing salary-paid slips on the computer terminal according to the present invention;

FIGS. 28A and 28B are explanatory diagrams showing examples of the data structure of the sales department's ledger on the computer terminal according to the present invention;

FIG. 29 is a diagram showing a system of business functional blocks used in the business support system according to the present invention;

FIGS. 30A and 30B show the contents of each business functional block and examples of slips used in the functional blocks in the system of FIG. 29;

FIG. 31 further shows the remaining part of FIG. 30B;

FIG. 32 shows the basic concept of the business support system according to the present invention;

FIG. 33 is a flowchart to help explain the operation of effecting initial setting in the business support system according to the present invention;

FIGS. 34A, 34B and 34C show an example of a business functional block appearing on the menu screen in the business support system according to the present invention;

FIGS. 35A and 35B show a screen appearing when an intelligent management model of the functional block shown in FIGS. 34A, 34B and 34C has been selected;

FIGS. 36A and 36B show a screen appearing when the factory management panel of FIGS. 35A and 35B is selected and opened;

FIG. 37 shows a screen appearing when the production line panel of FIGS. 35A and 35B is selected and opened;

FIGS. 38A and 38B show a screen appearing when the store management panel of FIGS. 35A and 35B is selected and opened;

FIG. 39 shows a screen appearing when the store food processing panel of FIGS. 35A and 35B is selected and opened;

FIG. 40 shows a screen appearing when the corporate group management panel of FIGS. 35A and 35B is selected and opened;

FIG. 41 shows an example of various types of slips displayed when the item ORDERS RECEIVED in FIGS. 35A and 35B is selected;

FIG. 42 shows an example of various types of slips displayed when the item ORDER PLACED in FIGS. 35A and 35B is selected;

FIG. 43 shows an example of various types of slips displayed when the item GOODS IN STOCK in FIGS. 35A and 35B is selected;

FIG. 44 shows an example of various types of slips displayed when the item FINANCE in FIGS. 34A, 34B and 34C is selected;

FIG. 45 shows an example of various types of slips displayed when the item ACCOUNTING in FIGS. 34A, 34B and 34C is selected; and

FIG. 46 shows an example of various types of slips displayed when the item CONSOLIDATED MANAGEMENT in FIG. 34A, 34B and 34C or 40 is selected.

Hereinafter, referring to the accompanying drawings, embodiments of the present invention will be explained.

(1) A business support system of the present invention is capable of immediately displaying the total sales for each person in charge, the total sales for each section, the total sales for each department, the total sales for each branch office, and the total sales for the company.

(2) A business support system of the present invention is capable of immediately displaying the total sales for each person in charge by commodity, the total sales for each section by commodity, the total sales for each department by commodity, the total sales for each branch office by commodity, and the total sales for the company by commodity.

(3) A business support system of the present invention is capable of immediately displaying the total orders placed or received for each person in charge, the total orders placed or received for each section, the total orders placed or received for each department, the total orders placed or received for each branch office, and the total orders placed or received for the company.

(4) A business support system of the present invention is capable of immediately displaying the total orders placed or received for each person in charge by commodity, the total orders placed or received for each section by commodity, the total orders placed or received for each department by commodity, the total orders placed or received for each branch office by commodity, and the total orders placed or received for the company by commodity.

(5) A business support system of the present invention is capable of immediately displaying the total recovery (including amount recoverable and amount recovered) for each person in charge, the total recovery (including amount recoverable and amount recovered) for each section, the total recovery (including amount recoverable and amount recovered) for each department, the total recovery (including amount recoverable and amount recovered) for each branch office, and the total recovery (including amount recoverable and amount recovered) for the company.

(6) A business support system of the present invention is capable of immediately displaying the recovery (including amount recoverable and amount recovered) for each person in charge by commodity, the recovery (including amount recoverable and amount recovered) for each section by commodity, the recovery (including amount recoverable and amount recovered) for each department by commodity, the recovery (including amount recoverable and amount recovered) for each branch office by commodity, and the recovery (including amount recoverable and amount recovered) for the company by commodity.

(7) A business support system of the present invention is capable of immediately displaying the recovery (including amount recoverable and amount recovered) for each person in charge by customer, the recovery (including amount recoverable and amount recovered) for each section by customer, the recovery (including amount recoverable and amount recovered) for each department by customer, the recovery (including amount recoverable and amount recovered) for each branch office by customer, and the recovery (including amount recoverable and amount recovered) for the company by customer.

(8) A business support system of the present invention is capable of immediately displaying the total accounts receivable for each person in charge, the total accounts receivable for each section, the total accounts receivable for each department, the total accounts receivable for each branch office, and the total accounts receivable for the company.

(9) A business support system of the present invention is capable of immediately displaying the total accounts receivable for each person in charge by commodity, the total accounts receivable for each section by commodity, the total accounts receivable for each department by commodity, the total accounts receivable for each branch office by commodity, and the total accounts receivable for the company by commodity.

(10) A business support system of the present invention is capable of immediately displaying the total accounts receivable for each person in charge by customer, the total accounts receivable for each section by customer, the total accounts receivable for each department by customer, the total accounts receivable for each branch office by customer, and the total accounts receivable for the company by customer.

(11) A business support system of the present invention is capable of immediately displaying the balance sheet for each person in charge, the balance sheet for each section, the balance sheet for each department, the balance sheet for each branch office, and the balance sheet for the company.

(12) A business support system of the present invention is capable of immediately displaying the total sales quantity for each person in charge, the total sales quantity for each section, the total sales quantity for each department, the total sales quantity for each branch office, and the total sales quantity for the company.

(13) A business support system of the present invention is capable of immediately displaying the sales quantity for each person in charge by commodity, the sales quantity for each section by commodity, the sales quantity for each department by commodity, the sales quantity for each branch office by commodity, and the sales quantity for the company by commodity.

(14) A business support system of the present invention is capable of immediately displaying the sales quantity for each person in charge by customer, the sales quantity for each section by customer, the sales quantity for each department by customer, the sales quantity for each branch office by customer, and the sales quantity for the company by customer.

(15) A business support system of the present invention is capable of immediately displaying information on the goods in stock for each section, information on the goods in stock for each department, information on the goods in stock for each branch office, and information on the goods in stock for the company.

What has been described above shows typical examples. A business support system of the present invention has useful functions to make various data analysis and judge the business performance and the future situation.

(16) In a case where the computer system is initialized after a computer or a recording medium according to the present invention is purchased, the computer or the recording medium can be adapted easily to the management structure or company structure the user has desired. The adapting work is done by just selecting the one the user needs from the items appearing on the menu screen and actually entering the data into worksheets (slits, forms, or ledgers).

(17) Use of an system of the present invention facilitates data transfer and exchange between the computer each user owns and the computer another user owns, which speeds up the process of placing and receiving orders between branch offices or between companies. This is because the entire system of the present invention is constructed as shown in the following items (a) to (e): (a) items for functional blocks organized as units in business have been classified beforehand; (b) items for jobs done in each of the organizations of the functional blocks have been classified beforehand; (c) the item names for the jobs have meanings in business and are classified so as to suggest the contents of each job; (d) the corresponding item is defined as a worksheet into which working data is to be entered; and (e) the above classifications are designed to shared by all the terminals.

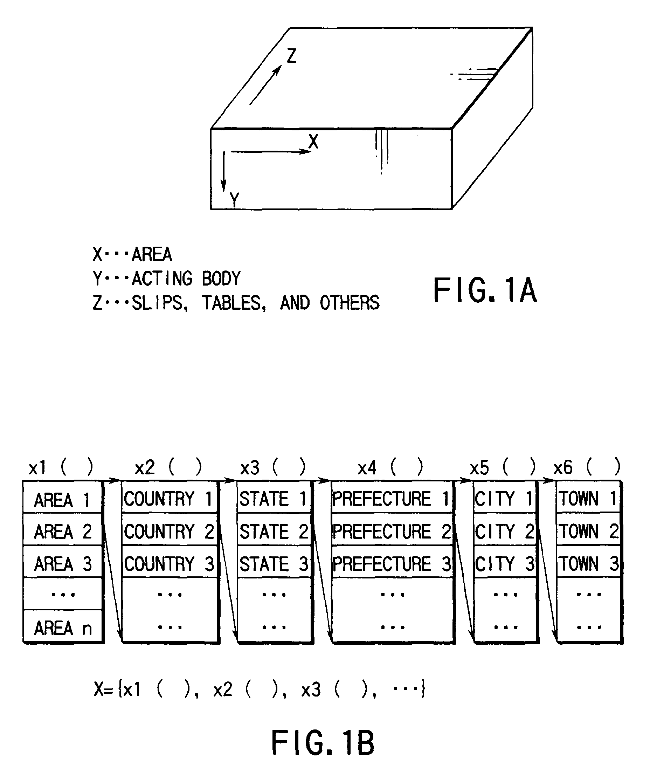

FIG. 1A shows a cell having the basic data structure of the present invention. The cell is a data access control cell. Although various types of cells are defined in the present invention, one representative cell will be explained.

In FIG. 1A, the data access control cell is a cell for slips. Using three axes, a data cell explained later can be accessed.

By setting parameters on the X-axis and Y-axis, the slip stored in the address determined by the parameters can be determined. For example, the slip for the goods person c in charge in department b of company a sold in town d can be displayed.

Specifically, as shown in FIG. 1B, when the user wants to see the contents of the desired slip or table in the above data structure, he or she has only to give parameters on the X-axis, Y-axis, and Z-axis and a parameter on the G-axis. The parameter on the G-axis will be explained later.

$$\text{X-axis parameter} = X (x1 (), x2 (), x3 (), ...)$$

$$\text{Y- axis parameter} = Y (y1 (), y2 (), y3 (), ...)$$

$$\text{Z-axis parameter} = Z (z1 (), z2 (), z3 (), ...)$$

$$\text{G-axis parameter} = G (... -g2 (), -g1 (), g0(), +g1(), +g2(), ...)$$

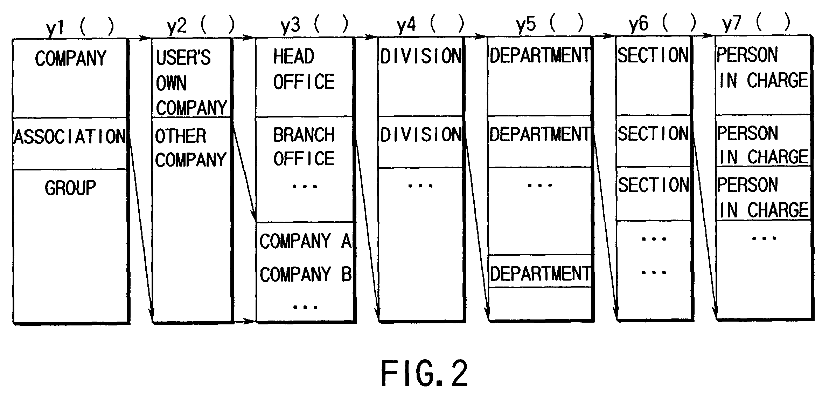

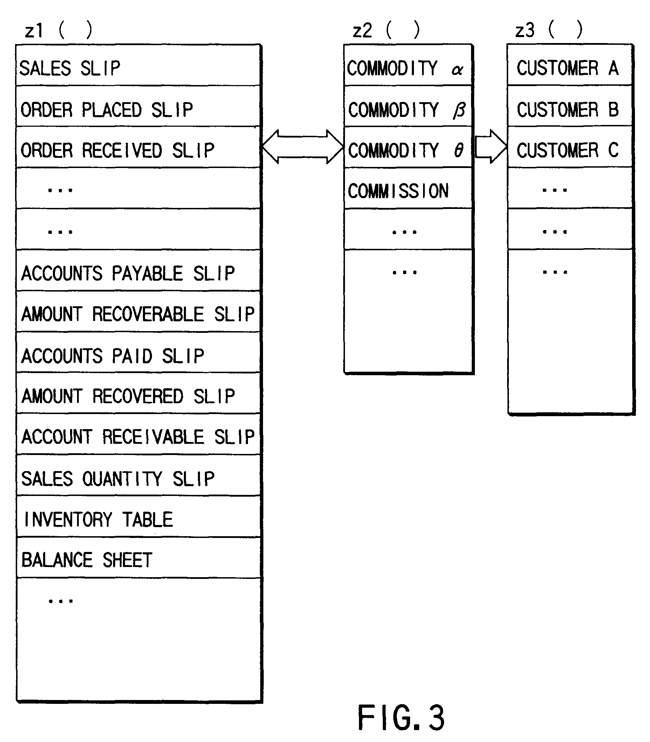

When parameter x0 is given in the X-axis parameters, a table for areas (including North America, South America, Asia, Europe, and Australia) appears on the display. When a specifying number is entered into () in parameter x1 (), this determines an area. Then, the table for countries in the area (e.g., Asia) appears on the display. Entering a specifying number into () in parameter x2 () determines a country. When a specifying number is entered into () in x3 () determines a state. Similarly, entering suitable specifying numbers into parentheses until a town has been determined.
To stop at the specification of a country, for example, 0 is entered into () in x3 () and in the later parameters. Alternatively, the operation of X-axis specification OK causes the selected state at that time to remain unchanged.
When y0 is entered in the Y-axis parameters, y1 () level classification table (company, association, group) table is displayed as shown in FIG. 2. Then, entering a number or the like into () in y1 () determines a company, association, or group. If a company is specified, the user's own company/other company classification table will be displayed at y2() level of hierarchy. Here, entering a number or the like into () in y2 () determines either the user's own company or another company. Then, the head office/branch office classification table or the branch office classification table is displayed at y3 () level of hierarchy. If the head office is selected, control will proceed to y4 () level of hierarchy and the department classification table is displayed. Entering a specifying number into () in y4 () determines a department. Similarly, entering specifying numbers into the parentheses in y5 (), y6 (), and y7 () determines a person in charge.
When z0 is given in the Z-axis parameters, the types of worksheet (e.g., slip) are displayed as shown in FIG. 3. The worksheet includes various types of slips, totaling sheets and analizing sheets. In the present invention, filling-in sheets used in business, including various types of slips, ledgers, and forms, and tables, are referred to as worksheets. Here, writing a slip code into () in z1() level of hierarchy determines the type of slip and writing a commodity code into () in z2 () determines the type of slip for a specific commodity. In this state, for example, if the specified slip is a sales slip and the commodity is commodity A for sale, the sales quantity, unit price, and others will be displayed. In this case, if the X-axis and Y-axis parameters were given, the sales slip for commodity α could be displayed on an area basis or a person-in-charge basis.
Not only is a commodity determined, but also a customer at z3 () level of hierarchy can be specified. By the specification, for example, it is possible to display to what company and how many units of commodity α the person in charge A1 sold. More than one type of commodity can be determined.
In the Z-axis, a commodity selecting parameter may be specified first and then a slip parameter be specified.
The above hierarchical structure is used in entering the data when the person in charge sold a commodity. For example, when the person in charge sold a commodity and specified the commodity, the slip table used for the commodity is displayed. When the commodity was sold, the sales slip, order-received slip, amount recoverable slip, sales quantity slip, or the like is selected.
When a checkmark is written in () in the G-axis parameter, the period of time is specified. For example, entering a checkmark into () in each of -g2 (), -g1 (), and g0 () specifies from two days ago to today. Entering a checkmark into () in g0 () specifies only today. Entering a checkmark into () in +g3 () specifies a check on the state of the data only three days later. An example of using the G-axis parameters will be explained later.
The system of the present invention has the above-described data structure and is designed to be able to perform sequential transmission and reception of common data between the head store and a branch store, between the main office and a branch office, or between the main office and each company in the group. The transmission and reception will be described later.
The information the data access control cell has includes various addresses. By the address, the real data stored in another data cell can be specified. In addition, real data can be written into another data cell specified by the address.
The reason why the control cell is constructed using the address information is that such a construction makes the entire memory size smaller. As can be seen from the explanation of the present invention, the control cell can function as an active header. This is because the control cell includes the address for an update flag explained later and the transmission destination address for the update flag. In a case where many microcomputers employ the method of the present invention, even when only the control cell is taken out from one computer and used in another computer, the real data in another computer can be accessed. The transmission of the address for the control cell through communication means enables the real data in the user's computer located at a distant place to be accessed.

Information on slips used in the present invention enables a date totalizing function to be achieved in the present system. This not only enables consolidated settlement between an affiliated company and the head office or between branch offices but also provides the user with business support.

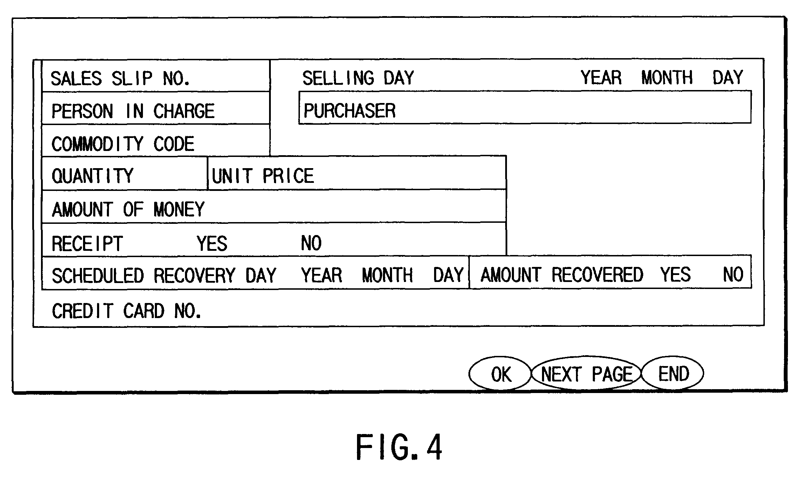

FIG. 4 shows a case where a person in charge sold good and entered the data into a worksheet (e.g., a sales slip). FIG. 4 shows a sales slip. For example, by giving a Z-axis parameter, a selection is made from the slip table of FIG. 3. The selected slip is displayed on the screen, with the items to be filled in being blank. When the person in charge is specified using a Y-axis parameter, the name of the person in charge is displayed automatically in the person-in-charge field.

The sales slip is usually used on the day of sale. Thus, the date on that day is written automatically in the sales day. The person in charge enters the code for a customer (customer code) or an individual customer indefinite code if the purchaser is an unregistered individual customer. Then, when the commodity code for the sold commodity, the quantity, and the unit price are entered, the sum total of money is displayed.

Here, whether money was received is set. When money has been received on that day, the mark YES is checked and the data input is ended. When money has not been received, a scheduled recovery day is entered. When payment has been made by credit card, its number is entered. To acknowledge the input data, OK is clicked. Moreover, more than one commodity was sold, the slip on the next page is displayed.

The data inputted as described above is stored in an intelligent data cell explained later.

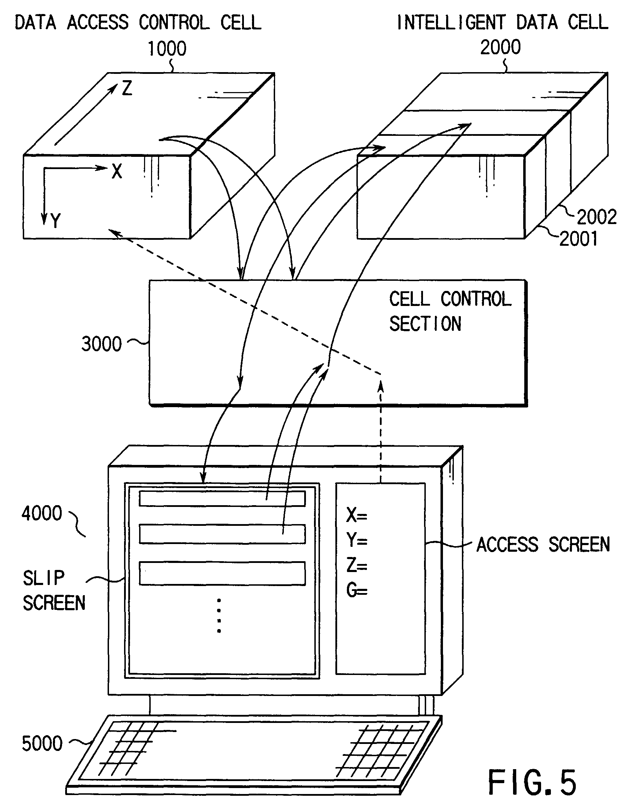

FIG. 5 shows the relationship between the above-described data access control cell 1000, an intelligent data cell 2000, a cell control section 3000, a display section 4000, and an operator section 5000. The display section 4000 is controlled via a display control section, which is omitted in the figure.

In the data access control cell 1000, when X, Y, and Z parameters are specified, a slip as shown in FIG. 4 appears on the display and enables data about sales work to be inputted. A sales slip of FIG. 4 will be explained as a representative example. The screen that allows parameters on the X-, Y-, Z-, and G-axes to be entered is caused to appear on the display 4000. From this screen, parameters are entered, thereby supplying the parameters to the control cell 1000 via the cell control section 3000. Then, the control section 1000 specifies the read address in the intelligent data cell 2000 via the cell control section 3000. As a result, the slip screen for the input of the specified data appears on the display 4000. Here, the user operates the keyboard in the operator section 5000, writes the necessary data into the slip, and finishes the action. Then, the written data is written into the intelligent data cell via the cell control section 3000.

The intelligent data cell 2000 includes a region 2001 in which the slip layout image data is stored and a region in which such data items as values and characters to be written in the blank spaces of the slip are stored. The control cell 1000 generates data items that also serve as read addresses in the intelligent data cell 2000.

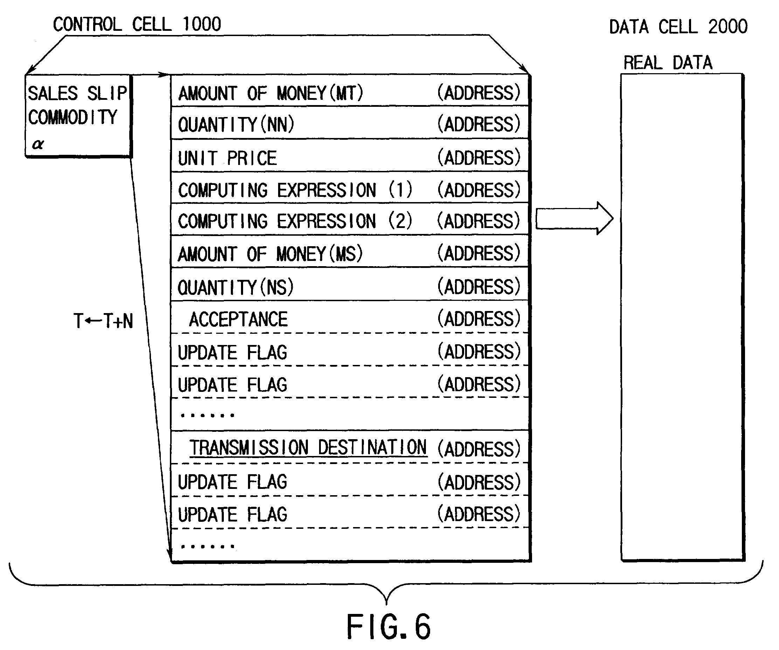

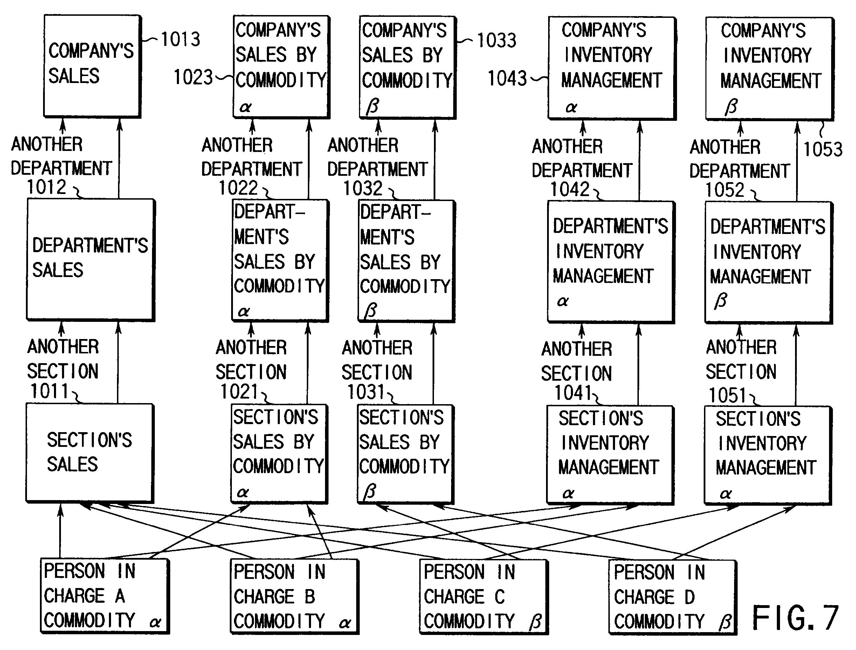

FIGS. 6 and 7 show an internal processing function provided in the control cell.

Now, it is assumed that a person in charge has entered the sales information into a sales slip as explained in FIG. 4. Then, the sales information is treated as section data, department data, division data, and company data in sequence. Thus, as shown in FIG. 6, the sales slip is accompanied by the address for storing the amount of money (MT) indicating the total sales, the address for storing the quantity (NT) indicating the total sales, the address for storing the unit price, the address for storing computing expressions, the address for storing the amount of money (Ms) indicating the amount of money the person in charge entered when selling the commodity, the address for storing the quantity (Ns) showing the quantity the person in charge entered when selling the commodities, the address for storing the update flag, and the address for the transmission destination to which the update flag is to be transferred. These real data items are stored in the intelligent data cell as explained in FIG. 5.

Now, when the person in charge has entered the amount of money (Ms) and the quantity (Ns) and operates OK on the screen of FIG. 4, the update flag is set to, for example, "1". Then, the following calculations are performed on the amount of money (MT) and quantity (NT) using specified computing expressions: $MT \leftarrow MT + Ms$ and $NT \leftarrow NT + Ns$. In this way, the updating process is carried out. After the updating process, the real data in the update flag, amount of money (Ms), and quantity (Ns) are cleared. Then, the update flag is written in the transmission destination (address) previously set.

The control cell 1000 reads the update flag periodically and, when the update flag is set to "1", it updates the data as described above.

FIG. 7 shows the relationship between the above-described update flag and the destination to which the update flag is transferred.

Now, it is assumed that four persons in charge A, B, C, and D (in the same section) sold commodities α and β and entered data into sales slips. Then, the destinations to which the update flag for each of the persons in charge A, B, C, and D are the section's sales slip 1011, the section's sales slips 1021, 1031 by commodity, and the section's inventory management slips (ledgers) 1041, 1051. Thus, in the section's sales slip, the amount of money (MT) from each person in charge is recognized as the amount of money (Ms) and the section's sales (MT) are created. In the section's sales slip 1011, the address for the department's sales slip is written as the transmission destination. Thus, in the department's sales slip 1012, the amount of money (MT) from each section is recognized as the amount of money (Ms) and the department's sales (MT) are created (MT ← MT + Ms). Similarly, in the company's sales slip 1013, the amount of money (MT) from each department is recognized as the amount of money (Ms) and the company's sales (MT) are created (MT ← MT + Ms).

In the sales slip by customer, too, an updating process as described above is carried out.

The route of slips 1021, 1022, 1023 is related to sales slips for commodity α and creates sales information for each section, for each department, and for each company automatically. The route of slips 1031, 1032, 1033 is related to sales slips for commodity β and creates sales information for each section, for each department, and for each company automatically. The route of slips 1041, 1042, 1043 is related to inventory management slips for commodity α and creates inventory management information for each section, for each department, and for each company automatically. The route of slips 1051, 1052, 1053 is related to inventory management slips for commodity β and creates inventory management information for each section, for each department, and for each company automatically.

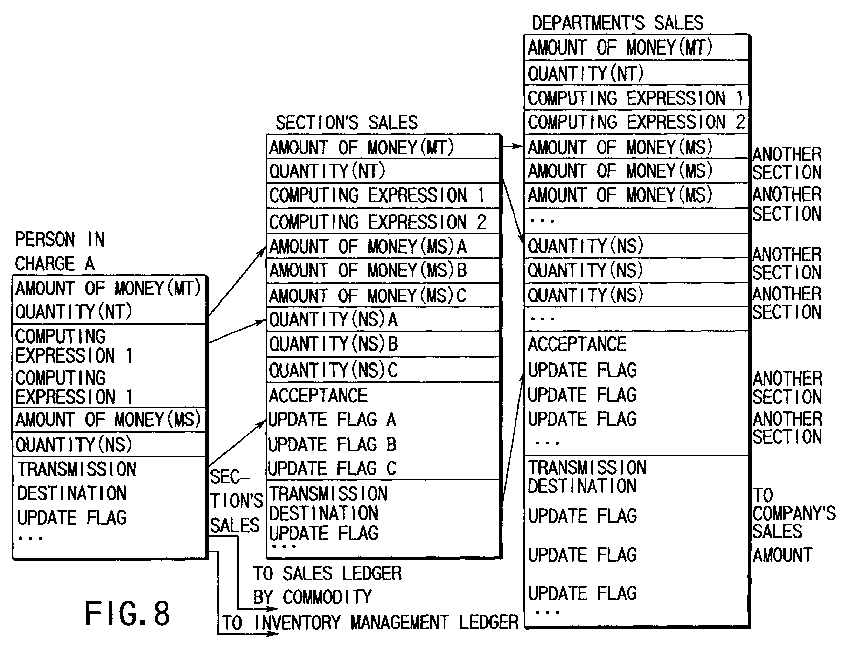

A given computing expression is selected, depending on whether the data input mode or the correction mode is on. In the correction mode, for example, a subtracting process or an adding process is carried out, depending on the contents to be corrected. In FIG. 6, although computing expressions (1) and (2) are shown as examples, more computing expressions or checking processes may be used. As the number of transmission destinations increases, the update flags are increased in number accordingly. FIG. 8 shows the route of sales slips 1011 and 1021 in further detail. When the person in charge has entered data into a sales slip, the information is transmitted to the section's sales slip. In the section's sales slip 1011, storage locations for the amount of money (Ms) are provided for the individual persons in charge A, B, C, and D. In addition, locations for the quantity (Ns) are provided for the persons in charge A, B, C, and D. Moreover, locations for the update flag are provided for the persons in charge A, B, C, and D.

In a control operation concerning the section's sales slip 1011, a check is made periodically to see if the update flag is set to "1". If the update flag is set to "1", this means that the amount of money (MT) and quantity (NT) for the person in charge corresponding to the update flag "1" have changed. Thus, the following calculations are done: MT ← MT + Ms for the corresponding person in charge and NT ← NT + Ns for the corresponding person in charge. Then, the update flag for the person in charge is changed from "1" to "0". For example, if the update flag related to the sales for person A in charge is set to "1", the following calculation is done: MT ← MT + (Ms)A. If the update flag related to the sales for more than one person in charge, for example, person B in charge and person C in charge, is set to "1", the following calculation is done: MT ← MT + (Ms)B + (Ms)C .

After the section's sales slip 1011 has been updated as described above, the update flag "1" is transferred to the update flag transmission destination. Then, in the department's sales slip 1012, the amount of money (MT) and quantity (NT) are updated. The updated information is transmitted to the company's sales slip.

In the route of sales slips 1021, 1022, 1023 for commodity α, too, sales information for each section, that for each department, and that for each company are created automatically. In the route of sales slips 1031, 1032, 1033 for commodity β, too, sales information for each section, that for each department, and that for each company are created automatically.

In the route for inventory management slips, a different computing expression is used. In the sales slip, the amount of money (MT) is the result of totalizing the amount of money (Ms). In inventory management, the following computing expression is used: NT (updated stock) ← NT (existing stock) - Ns (sales quantity).

Although examples of sales and inventory management have been explained, the system is provided with various types of slips and further allows addition of other various types of slips according to the rules explained above.

With a method conforming to the above-described rules, recovery slip information for each section, that for each department, and that for each company are created immediately. In addition, with a method conforming to the above-described rules, voucher information for each section, that for each department, and that for each company are created immediately.

It is easy to create a balance sheet for each section, that for each department, or that for each company making use of the amount of money in the recovery slip and that in the voucher. Therefore, in the direction of the Z-axis in the present invention, balance sheet information is arranged.

Next, information in the direction of the G-axis and a method of using the information will be explained.

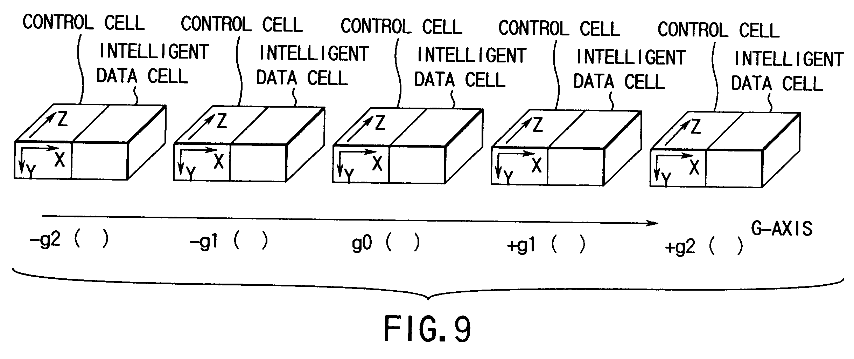

As shown in FIG. 9, sets of a data access control cell and an intelligent data cell shown in FIG. 5 are provided on a day-by-day basis as shown in FIG. 9. For example, g0 () means the cell on that day, -g1 () means the cell on the preceding day, -g2 () means the cell on the day before the preceding day, +g () means the cell on the following day, and +g2 () means the cell on the day after the following day. Actually in the real system, cells for one year or several years are provided on a day-by-day basis.

The time when the contents of the data in each cell are fixed as information for one day may be determined in the world reference time. Alternatively, it may be set to any time in each country or each area and the contents of the data in each cell be fixed as information for one day.

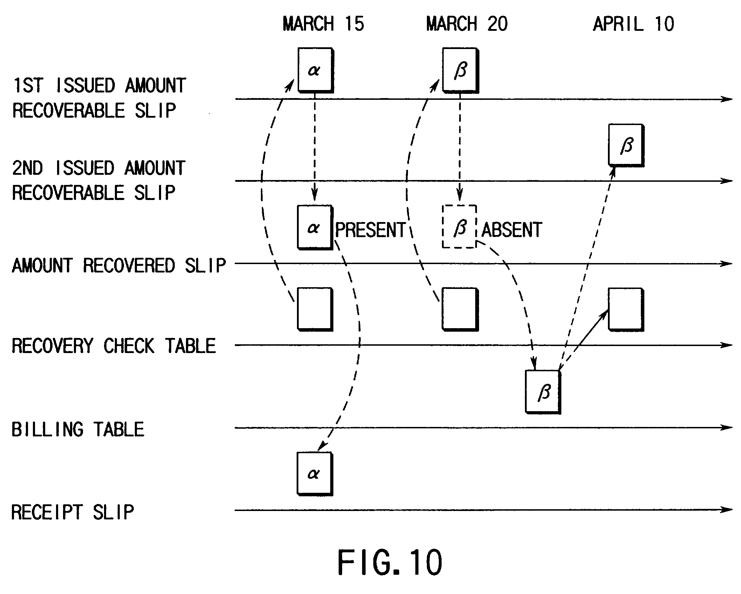

Referring to FIG. 10, a case where an amount recoverable slip (information) is created when commodities α and β were sold will be explained. If commodity α is sold and its scheduled recovery data is, for example, March 15, the commodity, person in charge, and purchaser, together with the amount of money to be collected, are written into the amount recoverable slip of the cell of March 15. In addition, the slip number and others are written as the check items for March 15 in the recovery check table.

When March 15 has been reached, the amount of money in the amount recoverable slip is read on the basis of the recovery check table and it is judged whether the corresponding amount recovered slip (amount of money) is present. If the corresponding amount recovered is present, the amount-of-money information is written into a receipt slip. Then, the check item for the slip number is cleared from the recovery check table. It is assumed that commodity β is sold and the scheduled recovery day for the selling price is, for example, March 20. When March 20 has been reached, the amount of money in the amount recoverable slip is read on the basis of the recovery check table and it is judged whether the corresponding amount recovered slip (amount of money) is present. If the corresponding amount recovered slip (amount of money) is absent, a bill for the bill issuing table is issued, a scheduled recovery day (for example, April 10) for the selling price for commodity β is set again, and its slip number is written into the recovery check table.

When April 10 has been reached, the amount recoverable slip is collated with the amount recovered slip as described above. When the amount recovered slip is absent several times in succession (the bill has not been paid), the relevant slip and customer list are printed out.

As shown in FIGS. 7 and 8, the amount recoverable slips for each day are accumulated, calculating the total amount of money for each department and that for each company. What is still unpaid is gathered into an accounts receivable slip, thereby calculating the total amount of money.

The daily totalizing slips are as follows.

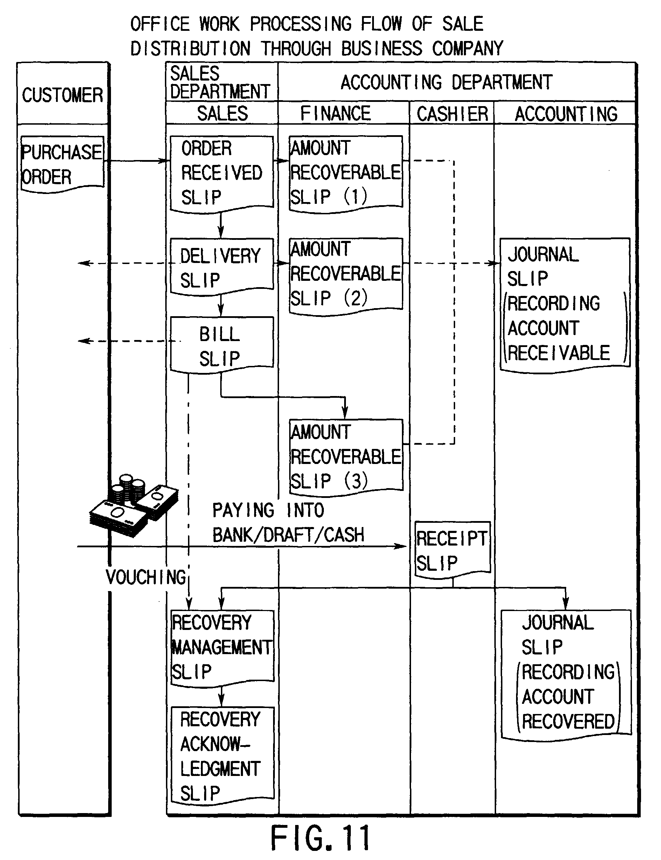

FIG. 11 shows the slip processing flow in sales work. When receiving an order from a customer, the person in charge in the sales department enters data items, including the commodity code and received order organization code, into an order received slip. As a result of this, data is inputted to the delivery slip and claim slip corresponding to the order received slip. On the other hand, in the slips belonging to the finance department in the accounting division, data is inputted to the amount recoverable slip (1) corresponding to the order received slip and the amount recoverable slip (2) corresponding to the scheduled delivery slip. Moreover, data is also inputted to the amount recoverable slip (3) corresponding to the claim slip. When issuing the corresponding order received slip, delivery slip, and claim slip, the person in charge enters the scheduled recovery date into the amount recoverable slips (1), (2), and (3). The commodity code, quantity, unit price, amount of money, and others to be written in the amount recoverable slips (1), (2), and (3) have been transferred automatically when the order received slip, delivery slip, and claim slip have been issued. When the customer has made payment after the issue of the claim slip, the data is written in the receipt slip in the cashier department. When data is inputted to the receipt slip, collation is made in the recovery management slip. If the receipt is correct, an amount recovered slip is issued. On the journal slip in the accounting department, the recovery of accounts receivable is added up. Moreover, in the accounting department, the accounts receivable are added up on the journal slip when the preceding amount recoverable slip (2) is issued.

When the data is inputted, the above slip is subjected to the totalizing process every day as described above. The commodity code, the code for the person in charge, the organization code, the customer code, and others correspond to the slip.

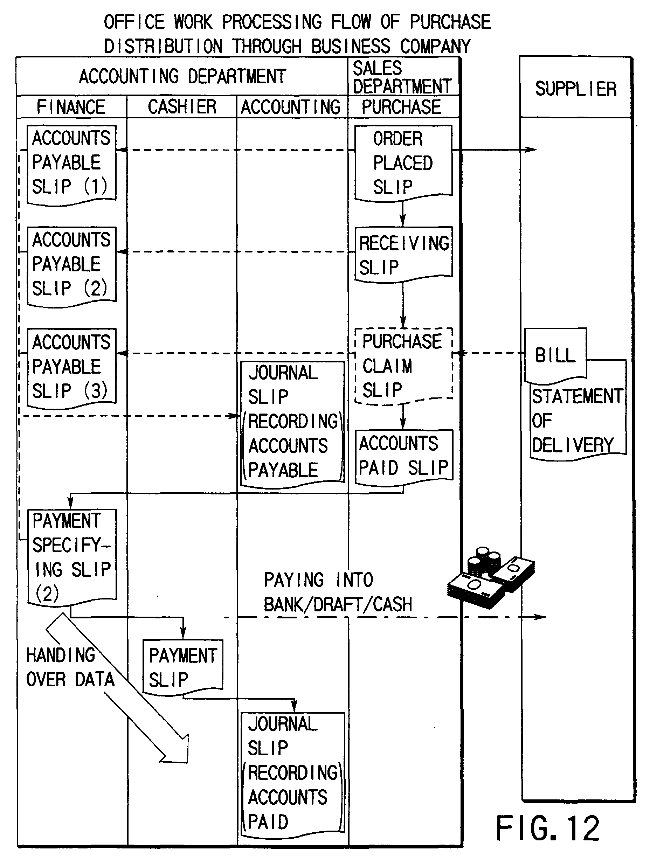

FIG. 12 shows the slip processing flow in sales work. While FIG. 11 shows an example of receiving an order, FIG. 12 shows an example of placing an order. The purchasing department issues an ordering slip. An accounts payable slip (1) corresponding to the ordering slip is issued under the control of the finance department. Next, the purchasing department issues a receiving slip corresponding to the ordering slip. This slip is such a slip as is issued when the supplier has answered that the commodity is in stock after the order was placed. An accounts payable slip (2) corresponding to the receiving slip is issued under the control of the finance department. After the supplier has issued a statement of delivery and a bill, the purchasing department issues a purchase claim slip. Since payment must be made, the purchasing department issues a payment acknowledged slip. In addition, the finance department issues an accounts payable slip (3) corresponding to the purchase claim slip. Next, the finance department issues a payment specifying slip. In response to this, the cashier department issues a payment slip, thereby actually paying money into the bank, paying by draft, or paying in cash.

When the data is inputted, the above slip is subjected to the totalizing process every day as described above. The commodity code, the code for the person in charge, the organization code, the customer code, and others are included in the header of the slip.

It should be noted that the information in the slip subjected to the totalizing process includes the date information on that day and days in the future. That is, information on a different day from that day on which the data was processed might be written in the accounts payable slip, payment slip, amount recoverable slip, and receipt slip, and others.

With the system of the present invention, when the scheduled payment day and scheduled recovery day have been written in the slips, the slip data items are stored in the data storage locations in the cell allocated to the scheduled days. For example, when the scheduled payment day is today, the slip data is stored in the cell (see FIG. 9) of parameter g0 () on the G-axis. When the scheduled recovery day is tomorrow, the slip data is stored in the cell (see FIG. 9) of parameter g1 () on the G-axis.

In the system of the present invention, business support involving the above-described totalizing process, merchandise management, and various data management is interlocked through a network in such a manner that it overcomes the time barrier, regional barrier, and language barrier.

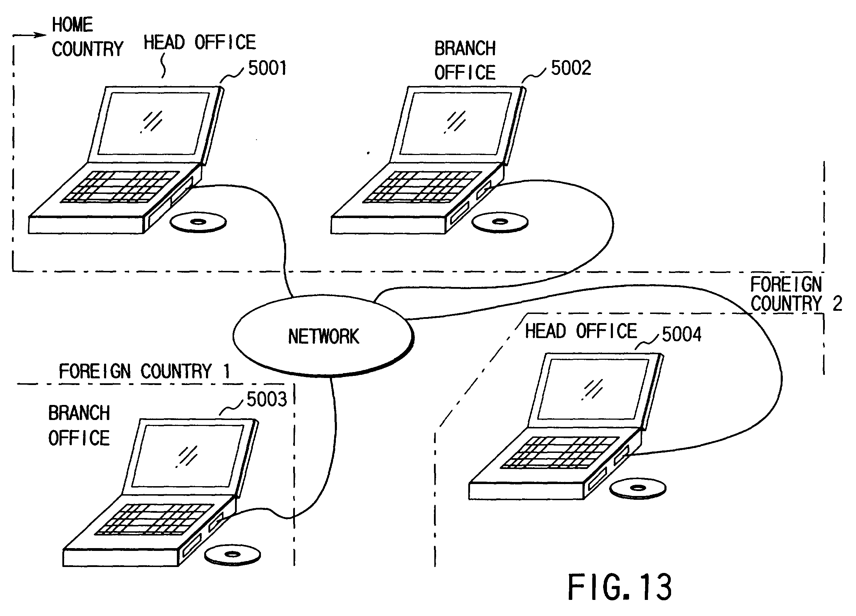

FIG. 13 schematically shows a case where a system of the present invention is constructed, taking domestic areas and overseas areas into account. A microcomputer 5001 at the head office at home, a microcomputer 5002 at a branch office in a domestic area, a microcomputer 5003 at a branch office in foreign country 1, and a microcomputer 5004 at a branch office in foreign country 2 are connected to each other via a network 6000 and a communication interface.

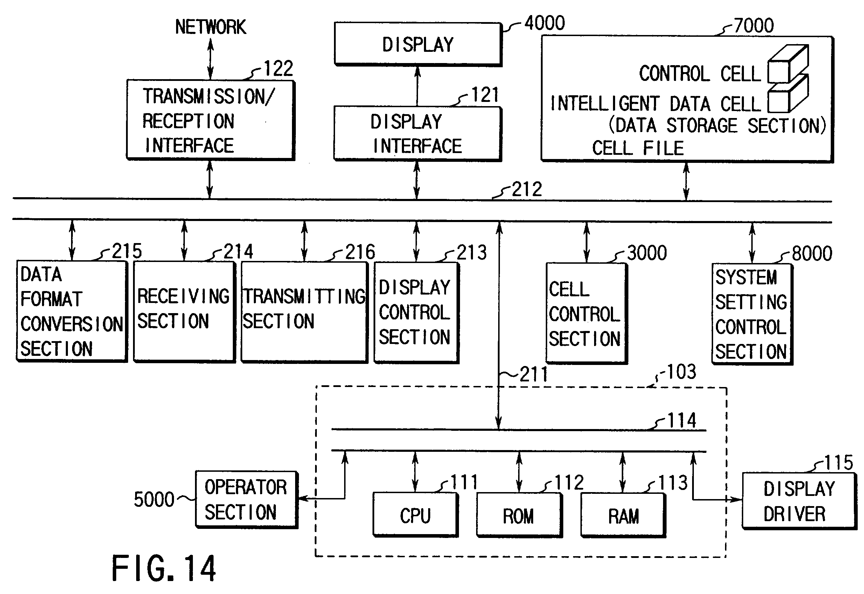

FIG. 14 shows the basic configuration of the microcomputer.

Numeral 103 indicates a hardware system control section, where a CPU 111, a ROM 112, and a RAM 113 are connected via a bus 114. The operator section 5000 and a disk driver 115 are also connected to the bus 114.

In the ROM 112, a program serving as an operating system (OS) that controls the basic operation of the control section 113 is written. The CPU 111 exchanges instructions with the ROM 112 and performs operation on the basis of the operating system. The RAM 113 is used as work memory for storing data temporarily.

The bus 114 is connected to a bus 212 via a bus 211. To the bus 212, functional blocks the present invention features are connected. A display 4000 is also connected via a display interface 121 to the bus 212.

The bus 212 is further connected to a network via a transmission/reception interface 122. Various types of network, including a public telephone network, the Internet, and an intranet, can be used.

The image and data appearing on the display 4000 is controlled by a display control section 213. The data taken in via a transmission/reception interface 122 is loaded into and stored temporarily in a receiving section 214. The data loaded into the receiving section 214 is converted in data format by a data format conversion section 215, if necessary. The converted data is stored in the receiving section 214.

The data stored in a transmitting section 216 is sent via the transmission/reception interface 122 to the network. In this case, the transmitted data includes the telephone number specifying the called party and the identification number (ID). The transmitted data is further scrambled and transmitted. Depending on the called party, the data format of the transmitted data might be converted by the data format converting section 215. The reason for this is that the data format of the computer at the called party might differ from the data format of the present system at the calling party.

The data format converting section 215 has the function of converting item names of the received data, if necessary. This function is needed for the following reasons: for example, when the customer has sent a voucher for the commodity, it is a recovery slip on the reception side; moreover, when the customer has sent a sales claim slip, it corresponds to a purchase claim slip on the reception side; additionally, when the customer has sent an order placed slip, it is an order received slip on the reception side. These conversions belong to the function of converting slip item names.

The data format converting section 215 further includes a language conversion dictionary for translating business terms in various languages and the function of converting the currency unit.

Therefore, the item names in a slip appearing on the screen are prepared in various languages. When the cell is received, the item names of the corresponding slip can be converted by the language conversion dictionary into the language the user desires.

The cell control section 3000 as shown in FIG. 4 and a cell file 7000 in which cell groups are stored are connected to the bus 212.

In the business support system of the present invention, all the microcomputers basically have the same data.

Thus, the sales information as explained in FIGS. 7 and 8 are constructed not only in the cells in the same computer but also in the cells in all the other computers that transmit and receive the data to and from each other.

To do this, the transmitting section 216 functions at the time when the updating process has finished.

In addition, a system setting control section 8000 used to do initial setting in the whole system and correct a function is connected to the bus 212.

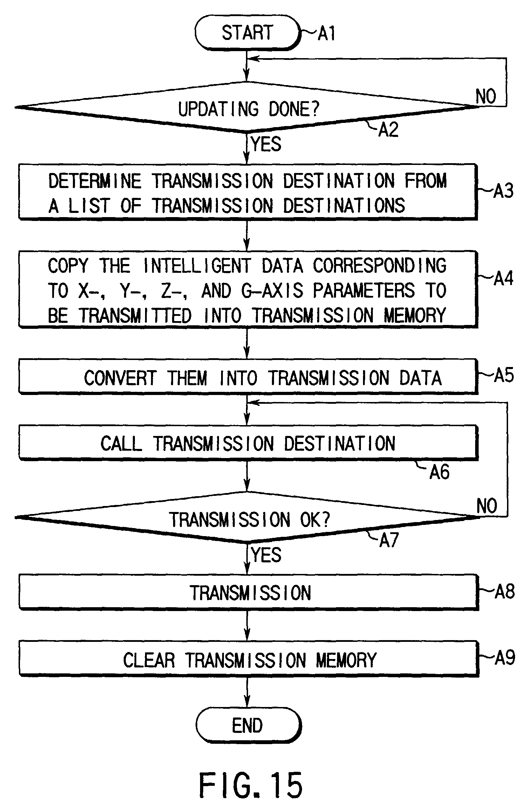

Hereinafter, the function of the transmitting section 216 will be described by reference to FIG. 15. The transmitting section 216 includes a list of transmission destinations and a transmission memory. When the updating process has been carried out, the cell control section 3000 reports that the updating process has been performed (steps A1, A2). Then, the transmitting section 216 determines the transmission destination from the list of transmission destinations (step A3) and temporarily copies the X-, Y-, Z-, and G-axis parameters to be transmitted (the parameters specifying each slip explained in FIGS. 7 and 8) and the intelligent data corresponding to the slip into the transmission memory (step A4). Then, the transmitting section 216 converts those data items into transmission data (serial) and calls the transmission destination (steps A5, A6). The transmission destination is called using the telephone number or password on the basis of the rules of the network. When the reception enable response is received from the transmission destination, the transmitting section transmits the data (steps A7, A8). After the transmission, the transmitting section clears the transmission memory and ends the process (step A9).

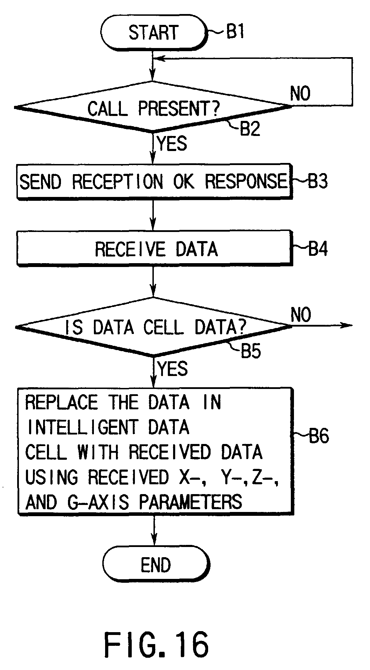

FIG. 16 shows the function of the receiving section 214 when the intelligent data has been received as described above. When there is a call from the called party and the called party has been registered as one of the callers, the receiving section 214 sends a reception enable response (steps B1, B2, B3). After sending the response, then the called party sends the data. The receiving section 214 then loads the data temporarily into the reception memory (step B4). Next, the receiving section 214 judges whether the received data is the intelligent data (step B5). If it is the intelligent data, the receiving section 214 replaces the data in the intelligent data cell in the cell file 7000 with the received intelligent data, making use of the received X-, Y-, Z-, and G-axis parameters (the parameters specifying each slip in FIGS. 7 and 8) (step B6). This makes the sales information and stock information resulting from the sale of commodities by persons in charge A, B, C, and D all the same in any computer.

With the system of the present invention, the receiving process is carried out each time the reception data arrives, and the data is updated. The time when transmission is made can be determined arbitrarily according to the transmission rule and is determined at the transmitting section. It is possible to specify the receiving party and prevent the data from an unspecified device from being received. It is also possible to specify the called party and transfer the data only to the specified called party.

As described above, for example, when the slip data is updated on the microcomputer at a branch office, the slip information is transferred to the microcomputer at the head office by the transmission method described earlier. Then, the corresponding data items at the head office are updated. Conversely, when the slip data is updated on the microcomputer at the head office, the slip information is transferred to the microcomputer at a branch office by the transmission method described earlier. Then, the corresponding data items at the branch office are updated. In this way, by sharing the data with plural branch offices, the data would never be lost, even if any one of the microcomputers failed. When a microcomputer is added to the network and shares the data, it receives the data from another microcomputer by the transmission method described earlier. With this approach, the network system of the present invention realizes a computer with a large-scale, high-speed totalizing function.

As described above, the system of the invention produces the following business support effects:

(1) The transmission/reception means connects between the individual microcomputers, thereby establishing a network.
(2) The structure of the business data is based on a common format.
(3) The daily totalized data is transmitted to each microcomputer.
(4) Because the data structure is classified hierarchically in the direction of multiple axes, the data can be analyzed from various angles by giving parameters to each axis.
(5) Because cells (blocks with the common data structure) are arranged in the direction of the time (date) axis, the data can be analyzed in the direction of the time axis. Use of the result of the analysis makes it possible to quickly get judging material in making a project plan and a financing plan necessary for business.

Although each functional block has been constructed in hardware as shown in FIG. 14 in the explanation, the data format converting section 215, transmitting section 214, receiving section 216, display control section 213, cell control section 3000, and cell file (data storage section) 7000 may be recorded on a recording medium (e.g., an optical disk or a magnetic disk) and the recording medium be installed in a personal computer, thereby realizing the above-described functional blocks. Thus, it goes without saying that the idea of the present invention also covers the data structure recorded on the recording medium and the control data for realizing the above functions.

The present invention is not restricted to the above embodiment.

In FIG. 7, when the person in charge has sold a commodity, the sales information is transmitted to the section's sales, the department's sales, and the company's sale simultaneously. The sales information, however, may be transmitted only to the section level or the smallest group unit level, instead of being transferring to the entire organization at the same time when the commodity was sold. Then, the department's sales information or the company's sales information may be gathered by the executives of the company, if necessary.

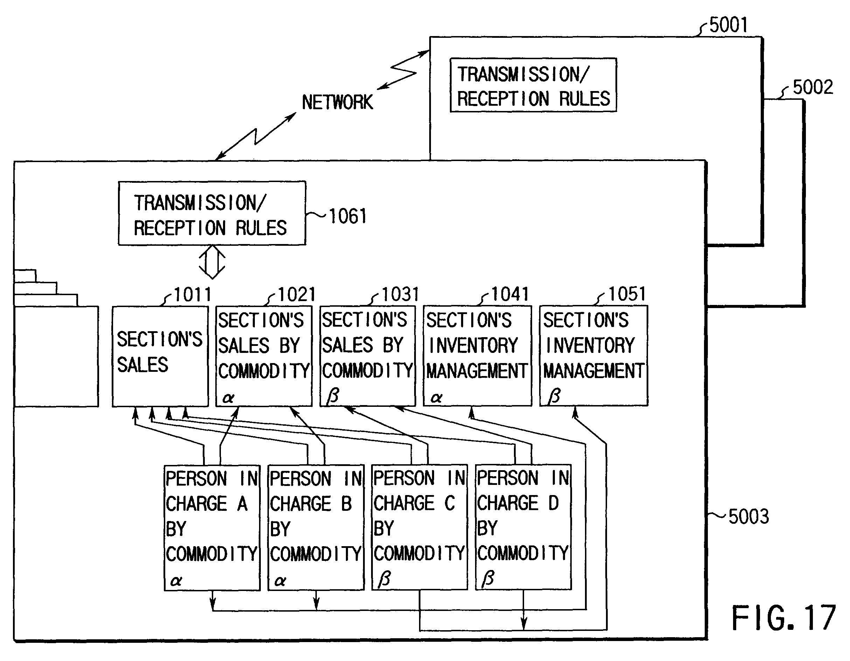

FIG. 17 shows a state where sales information is gathered on a section basis when commodities were sold. Now, it is assumed that four persons in charge A, B, C, and D (in the same section) sold commodities α and β and entered data into a sales slip. Then, the destinations to which the update flag for each of the persons in charge A, B, C, and D are the section's sales slip 1011, the section's sales slips 1021, 1031 by commodity, and the section's inventory management slips (ledgers) 1041, 1051. Thus, in the section's sales slip, the amount of money (MT) from each person in charge is recognized as the amount of money (Ms) and the section's sales (MT) are created.

In the sales slip by commodity, too, a similar process to what has been described above is carried out.

The slip 1021 is a sales slip for commodity α and sales information is created section by section automatically. The slip 1031 is a sales slip for commodity β and sales information is created section by section automatically. The slip 1041 is an inventory management slip for commodity α and inventory management information is created section by section automatically. The slip 1051 is an inventory management slip for commodity β and inventory management information is created section by section automatically.

When the information for each section is updated, information as to whether the updating has been done is transmitted to a transmission/reception decision section 1061. The transmission/reception decision section 1061 is provided in the receiving section 214, transmitting section 216, or cell control section 3000 in FIG. 4.

Now, it is assumed that the computer the persons in charge A, B, C, and D operate is the microcomputer 5003 at the branch office in foreign country 1 in FIG. 13. The computer 5003 transmits the updated data via the network to the microcomputer 5001 at the head office and the microcomputer 5002 at the branch office. The data is stored in the corresponding locations having the identical data structure. As a result, sales information is constructed in the computer 5001 at the head office in such a manner that it has the same format as that of the data in the computer 5003 in foreign country 1. The transmission/reception decision section 1061 is capable of determining not only the data to be transmitted to another computer but also whether to permit the acceptance of the data transmitted from another computer.

The timing with which the daily totalized data is transmitted to another computer for updating is set in various ways. For example, when computers are provided at a first branch office, for example, one of them is set as the representative computer of the first branch office. The representative computer is so set that the remaining computers used at the first branch office transmit the updated data to the representative computer chronologically. Namely, at the branch offices or the head office, the representative computer gathers the data chronologically.

In contrast, between the representative computers for communication at branch offices and between the representative computers for communication at the head office and branch offices, time zones for data transmission and reception are determined beforehand. For example, the data is transmitted and received on a 6-hour basis, a 12-hour basis, or a 24-hour basis. The computer on the data reception side constructs a cell for each day of FIG. 9 using a unique reference (or using local time or the time determined in the world time as a reference).

In the case where sales information for each section, sales information for each section by commodity, and inventory management information for each section are present, when the sales for all the branches or the sales for the whole company are required, the user operates the computer. For example, when the user operates the operator section 5000, opens the menu screen, and selects and displays the sales slips for all the branches or for the whole company, the computing processes as shown in FIGS. 7 and 8 are carried out automatically, allowing the user to look at the present sales situation.

Furthermore, when the user gives parameters in the direction of the G-axis to specify the period of inquiry and further specifies an amount recoverable slip, it is possible to totalize the amount of money to be collected written on the amount recoverable slip for several days. This enables the user to know the total sum of money to be collected in a few days. When specifying an accounts receivable slip, the user can know the total sum of money to be paid in a few days.

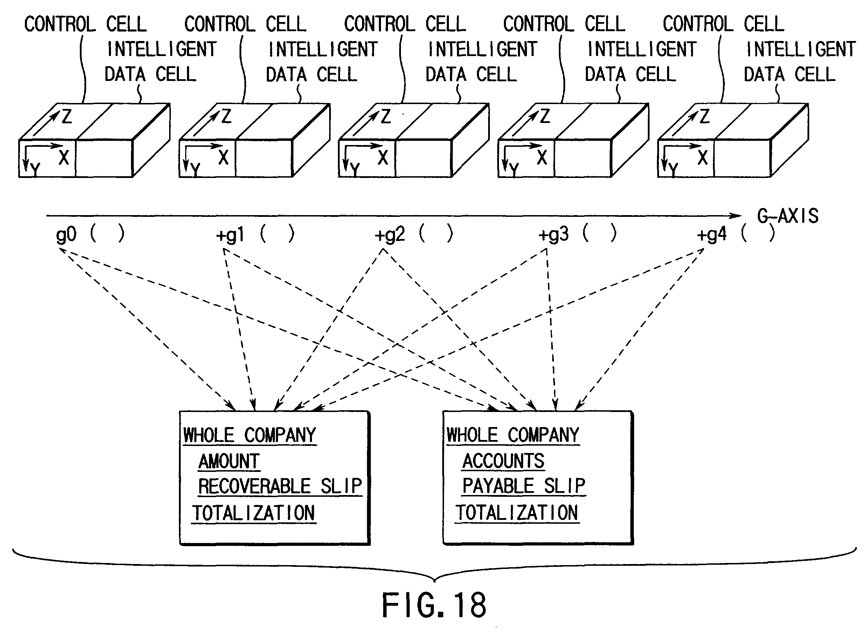

While FIG. 18 shows examples of the amount recoverable for the whole company and the accounts receivable for the whole company, the present invention is not limited to these. The amount recoverable by commodity and the accounts receivable by commodity may be obtained. Moreover, the amount recoverable for each department or division and the account receivable for each department or division may be obtained.

The way of displaying the state of the amount recoverable or accounts receivable in a single company has been explained.

The system of the present invention enables information (cells) to be transmitted and received freely to and from an affiliated company or another company. This makes it possible to perform a consolidated accounting process in a cooperate group at high speed.

With the system of the present invention, various types of slips are provided in the direction of the Z-axis. Related slips are correlated to each other using the update flag and its transmission destination information as explained in FIGS. 7 and 8.

In a recovery slip, information (payer information) indicating from which company the money was collected is written. In a voucher, information (payee information) indicating which company the money was paid to is written. As described earlier, the amount of money collected for the whole company and the amount of money paid for the whole company can be obtained using those pieces of information as described above. Various types of business information about not only the user's company but also other companies can be stored in cells having the data structure of the present invention.

For example, a balance sheet, a statement of profits and losses, and a cash flow sheet can be created on the microcomputer in each company. In addition, the daily totalizing file of account titles and a daily totalizing file of subsidiary account titles can be created. Moreover, the file can be created currency by currency since the present system covers international areas.

In a case where there are a parent company and subsidiary companies, when consolidated accounting is done, pieces of information, including consolidated automatic journal slips, consolidation adjustment journal slips, daily totalization of consolidated account titles, and daily totalization of consolidated subsidiary account titles, are transmitted from a subsidiary company to the parent company on the basis of the communication rules. Additionally, consolidated accounting organization information, the beginning balance of consolidated account titles, and the beginning balance of consolidated subsidiary account titles are also transmitted as accounting information to the parent company.

The parent company can create a consolidated cash flow sheet, a consolidated income statement, a consolidated balance sheet, and the like on the basis of the account information from subsidiary companies. Thus, the companies which have been registered with each other can carry out a consolidated accounting process easily and automatically. They can execute it monthly, semiannually, or annually.

The basic idea of the present invention is not limited to the above embodiment.

In the above embodiment, the system that has been constructed beforehand is used. A computer, however, has to be constructed when it is purchased by the user in such a manner that it has the function the user desires. In a case where the function of a computer is constructed at the beginning so as to adapt to the company's business form, a computer system of the present invention is designed to enable the user to construct such a function. Even when the company structure is changed, the computer system is designed to enable the user to reconstruct the function of the computer so as to adapt to the new company structure.

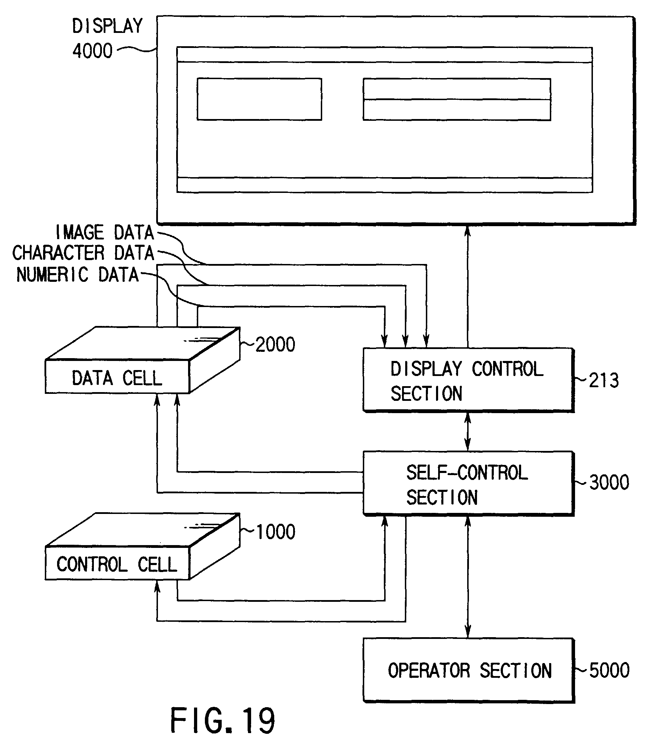

FIG. 19 shows the relationship between the control cell 1000, data cell 2000, cell control section 3000, display section 4000, operator section 5000, and display control section 213.

In the control cell 1000, an address for reading the data in the data cell 2000 is written. The address is determined by entering the above-described parameters on each of the X-, Y-, and Z-axes via the cell control section 300 from the operator section 5000. After the address is determined, the address in the data cell 2000 is specified via the cell control section 3000 and the image data, character data, and numeric data are read. These data items are displayed on the display via the display control section 213.

The image data includes such frame image data as slips and ledgers. The character data includes such data as item names, captions, and names for slips or ledgers. The numeric data includes such data as date, sales, and the amount paid. In a microcomputer just purchased, there are such frame data as slips and ledgers. The numeric data items are written as "0", because they will be inputted from now on.

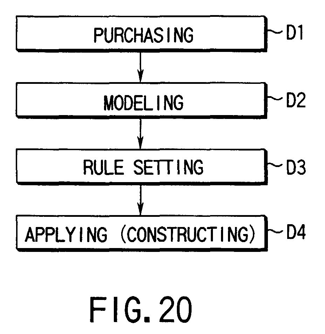

FIG. 20 shows the process of effecting modeling (D2) after a computer is purchased (D1), setting rules for the use of computers or business rules (D3), and actually using and applying computers (D4) (or the construction and execution processes). Modeling means selecting a business function on the computer so as to adapt to the company structure of the user who has purchased the computer. Setting rules means setting various rules, including the scope of an employee's official authority (e.g., sales authority or approval authority), the limit of credit given, and various conditions of customers, after the company structure is constructed as an electronic organization on the computer.

In the system of the present invention, various active organizations have been prepared, taking into account conceivable organizations in the workings of business (e.g., company management).

All the conceivable functions and organizations are assumed as follows: (1) a case where a company structure is constructed; (2) a case where the necessary organization is constructed in business; (3) a case where a management organization is constructed for private management; (4) a case where a management organization is constructed; and (5) a case where a administrative management organization is constructed. At the stage where the functions and organizations are actually used, since some organizations or functions are unnecessary, depending on the contents of the business or the activity range of the company, they can be set so that they may be prevented from being used.

Namely, the computer system of the present invention can be adapted easily to the company by just selecting the organization and function after the purchase.

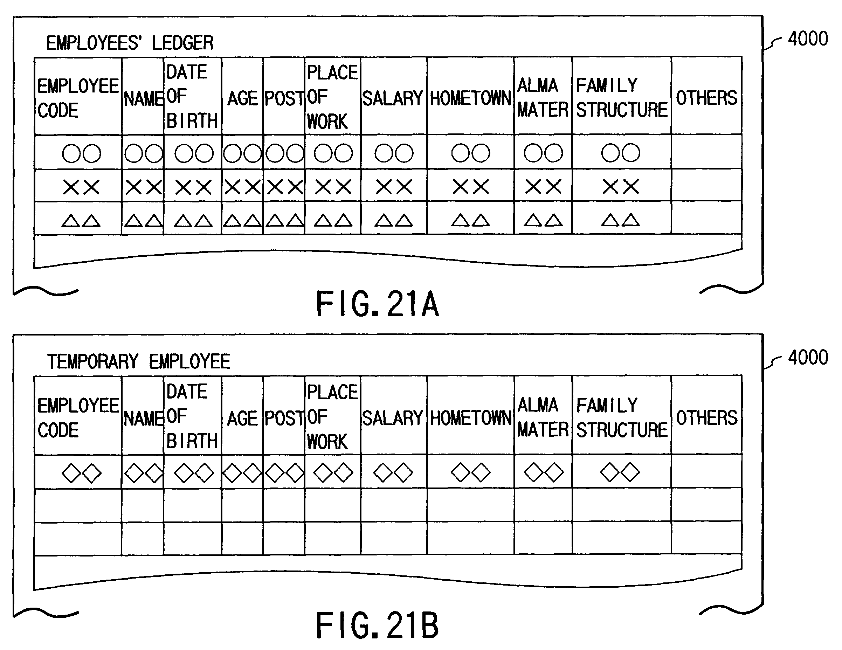

As shown in FIG. 21A, for example, the personnel structure (Y-axis) of the user's company (X-axis) and the employees' ledger (Z-axis) can be read and displayed. Immediately after the purchase, because the employees' information filling-in field is blank, it is necessary to enter the company's employees' information into the field.

The input items include code, name, the date of birth, age, post, place of work, salary, hometown, alma mater, family structure, special talent, and comment.

When there are temporary employees, a temporary employees' ledger is created in a similar manner as shown in FIG. 21B. In the case of temporary employees, information on additional conditions, including working hours, is added. Some items, including post, hometown, alma mater, and family structure, are omitted.

Next, a detailed statement of salary for each of the employees and temporary employees must be created.

The detailed statements of salary are handled at, for example, the cashier's office. In such a case, when specifying and displaying the accounting structure (Y-axis) of the company (X-axis) and the detailed statement of salary (Z-axis), the user can deal with the detailed statements of salary for all the employees and temporary employees.

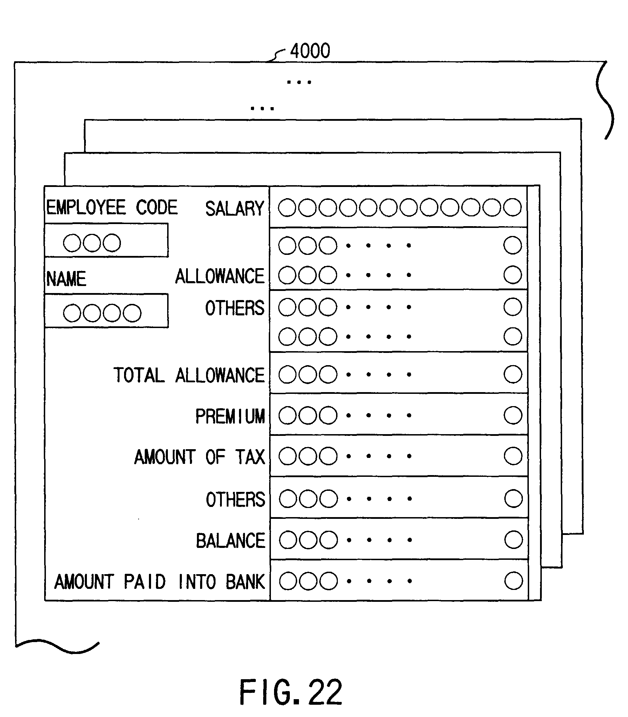

FIG. 22 shows an example of the detailed statements of salary displayed on the screen. First, the frame of the detailed statement of salary appears and then an employee's code and salary appear. When the next detailed statement of salary is clicked, then the following different employee's detailed statement of salary comes to the front. When the employees' ledger has been created, each employee's detailed statement of salary has been prepared automatically on the basis of each employee's code. Moreover, when each employee's salary has been written in the employees' ledger, the amounts of salary have been written in the detailed statements of salary displayed.

The reason for this is that the address and the transmission destination address have been written in the control data for displaying the employees' ledger. The control data is the data stored in the control cell. Although not shown in the field for the amount paid into the bank, it is accompanied by the bank into which salary is to be paid and the number of an employee's bank account.

In FIGS. 21A and 21B, the employees' ledger has been explained using an example of the screen appearing on the display in constructing the data. Inside the control cell, however, the transmission destination information on the pieces of information written is attached in such a manner that it is linked with each field of the ledger.

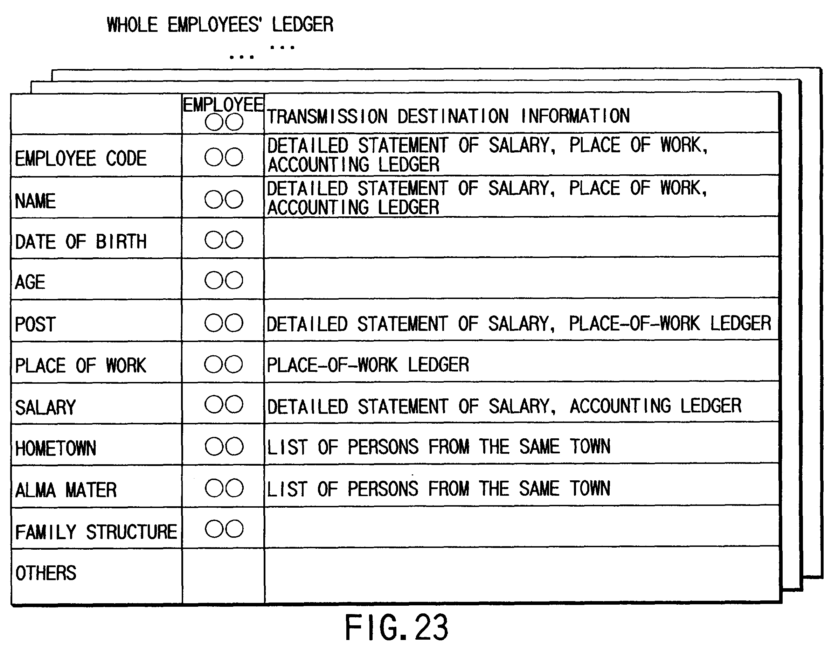

FIG. 23 shows the data structure format for the whole employees' ledger. FIGS. 21A and 21B show the display format for the employees' ledger. In the data structure format, the detailed statement of salary, place-of-work ledger, and accounting ledger are specified as the transmission destinations of each employee's code and name. The transmission destination of post includes the detailed statement of salary and place-of-work ledger. The place-of-work information is so specified that it is transferred to the place-of-work ledger. Moreover, the salary information is so specified that it is transferred to the detailed statement of salary and accounting ledger. The hometown information is so specified that it is transferred to a list of persons from the same town. The alma mater information is so specified that it is transferred to an alumni association ledger.

When the employees' ledger has been created, as many detailed statements of salary as are equal to the number of employees are created automatically. That is, the detailed statements of salary shown in FIG. 22 are created automatically. At this time, the employees' codes, names, and salaries are set in the detailed statements of salary automatically. Specifically, control data for the detailed statement of salary is created in the control cell.

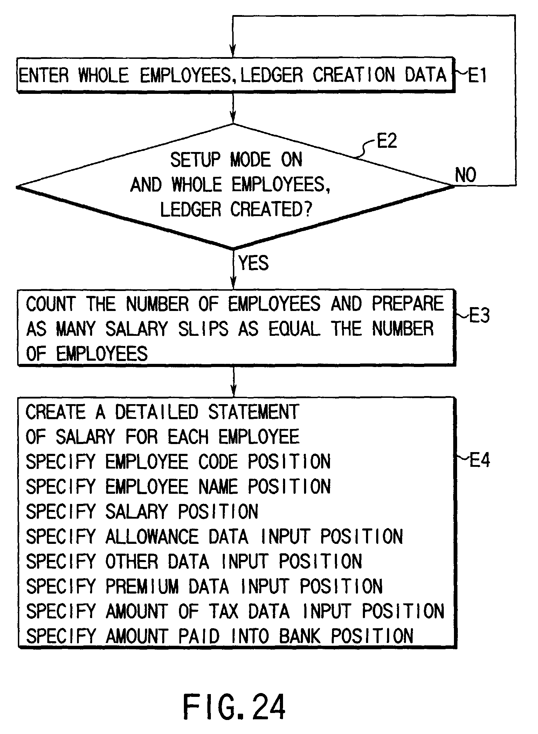

FIG. 24 shows a processing routine in a case where data on the detailed statements of salary is constructed automatically after the whole employees' ledger has been created. When the setup mode is on and the whole employees' ledger has been created (steps E1, E2), the number of employees in the salary ledger is counted and as many detailed statements of salary as equal the number of employees are prepared (step E3). Next, the detailed statement of salary for each employee is created (E4).

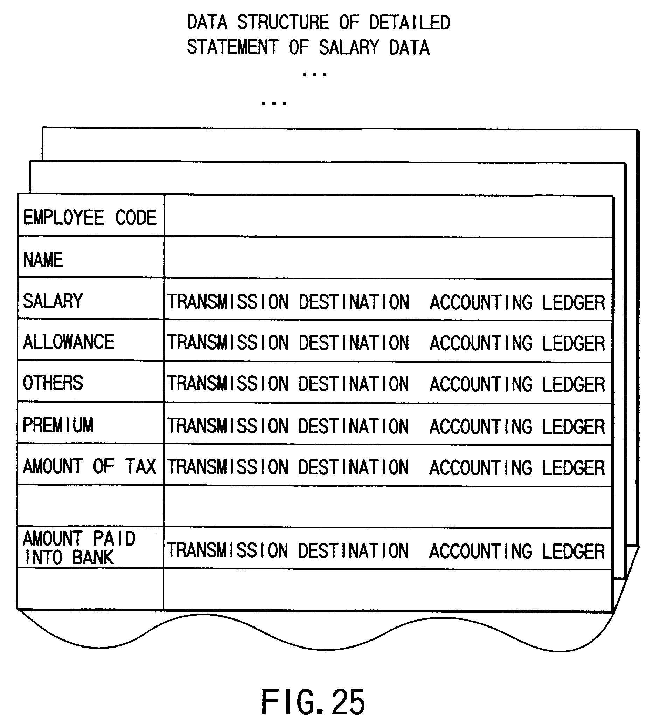

Specifically, data on the detailed statement of salary is created in the control cell as shown in FIG. 25. Namely, data items (specifically, the address for the data cell (in the address, data items, including an employee's code and an employee's name, have been written)) appearing in the detailed statement of salary, including employee's code, employee's name, salary, and allowance, are allocated to the detailed statement of salary. Furthermore, transmission destination information is also incorporated. As for the transmission destination of each data item written in the detailed statement of salary, salary, allowance, premium, and others are transferred to the information part of the corresponding employee's code in the accounting ledger.

Specifically, the same address as that written in the preceding detailed statement of salary is written in the fields for the corresponding employee's code and salary in the accounting ledger control data.

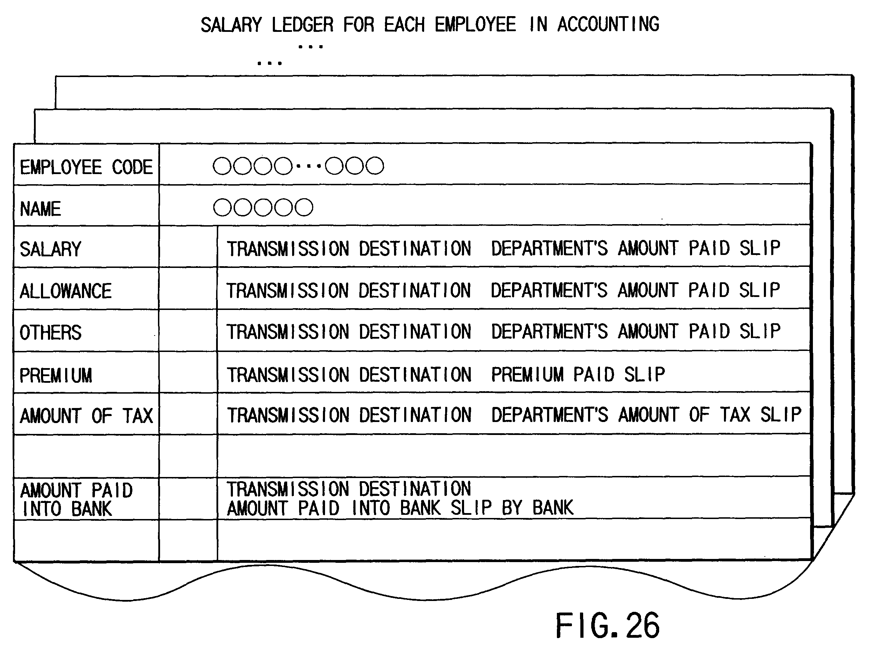

FIG. 26 shows an example of a ledger related to salary at the accounting department. In the ledger, pieces of information on the salary and allowance for each employee are written, followed by transmission destination information for each piece of information. Since the number of the bank account is incidental to the amount paid into the bank, the amount paid into the bank is transmitted to a paying slip for each bank.

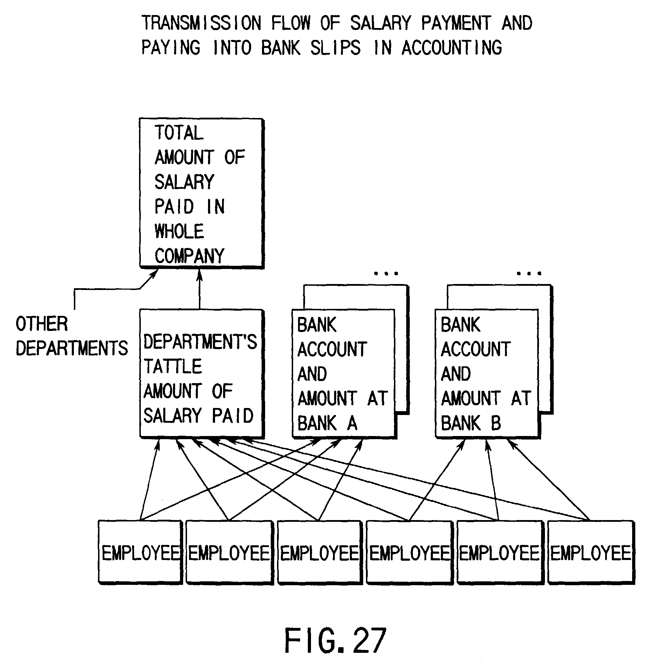

FIG. 27 briefly shows how the salary paid information is transmitted at the accounting division. The amount of salary paid to each employee is transmitted to a slip that totals the amount of salary paid in the whole department. The total sum of the amount of salary paid in the department is transmitted to a slip that totals the amount of salary paid in the whole company. Referring to the number of the bank account, the amount paid into the bank is transmitted to the bank paying slip.

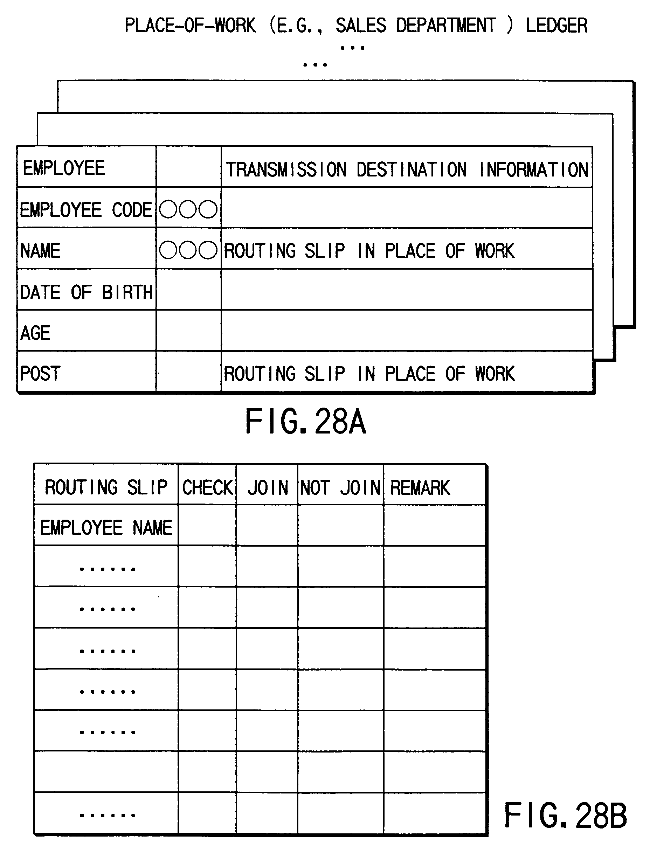

FIG. 28A shows the state where, for example, the sales department's personnel ledger is created, with the employees' ledger already created. At the ledger of an organization to which the employees belong, information on the whole employees' ledger is used as it is, accompanied by the transmission destination information. The transmission destination information includes a routing slip (FIG. 28B) used in the organization to which the employees belong. Information on the name of an employee is transmitted to the field for employee's name on the routing slip.

As described above, the necessary information about the employees is created and then the organization to which each employee belongs is set. After information about the employee's salary is determined, the information is directed automatically to the accounting system.

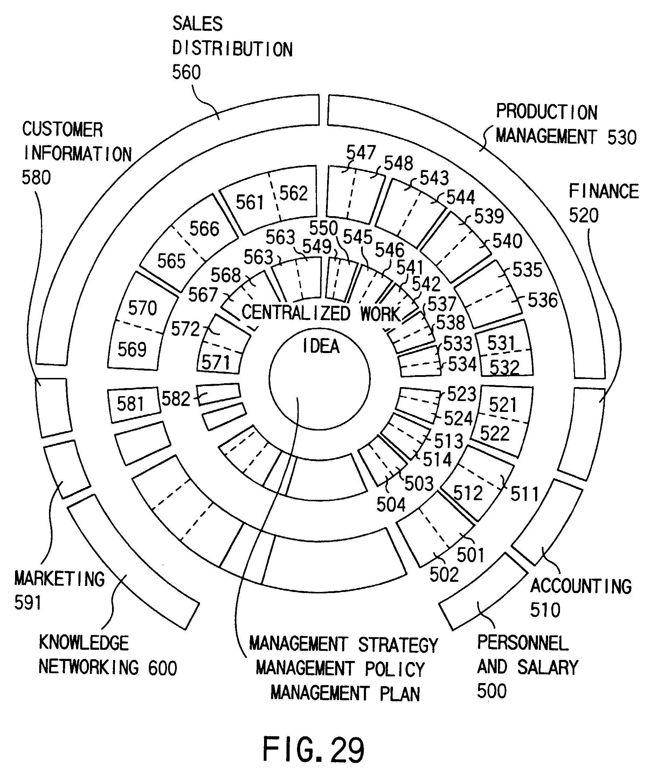

FIG. 29 shows a standard model when the company is organized. In the model, various types of slips are circulated. As explained earlier, each of them can be linked with the necessary places.

FIG. 29 shows each type of functional model set in the system of the present invention. To make it easier to understand, each model is shown, centered on the idea of company management. Each functional model is assigned a reference symbol and will be explained briefly. A functional model 500 is a model at the personnel and salary department. When the functional model is turned on, this makes it possible to deal with data items including a detailed statement of salary and a letter of appointment used in doing work related to personnel and salary. The individual functional models are classified into the contents of work and the work regulations. Slips handled in the work are allocated to the items about the contents of work. The limits to work and agreement on the work are inputted to the work regulations.

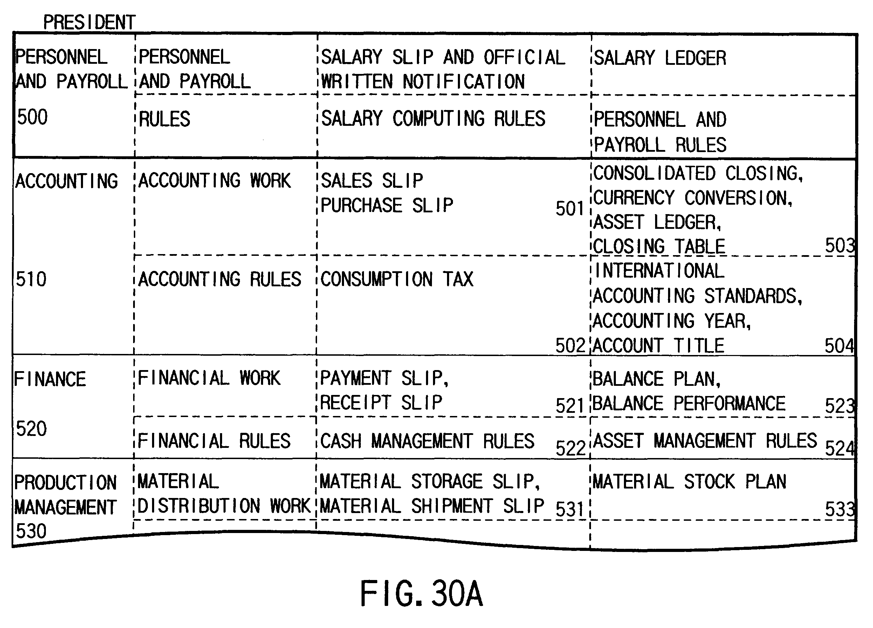

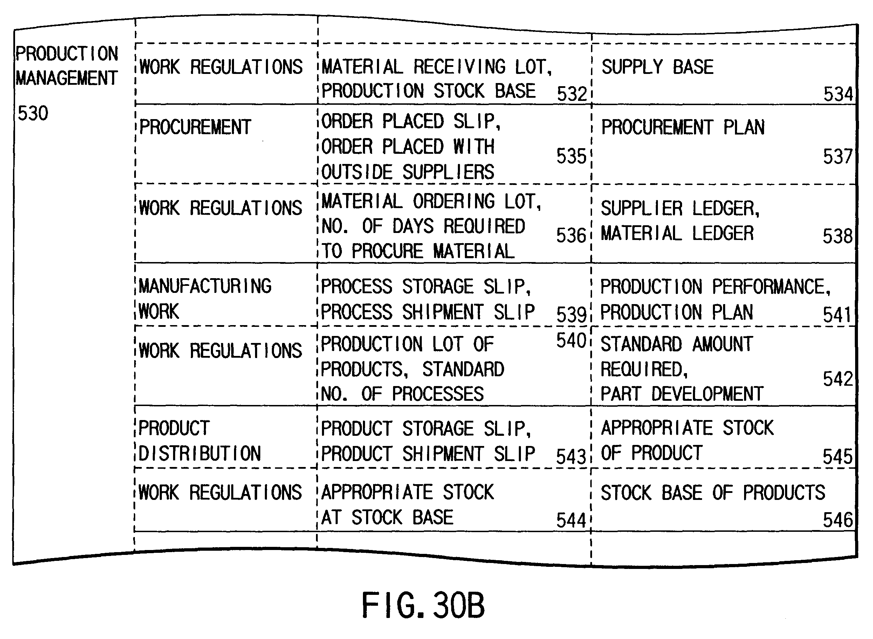

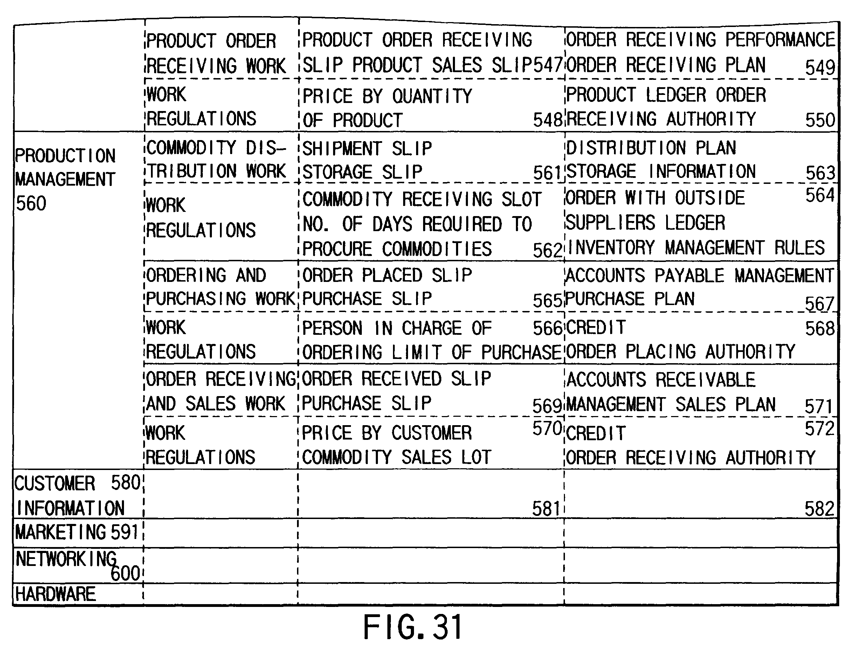

The contents of each block in FIG. 29 are shown in detail in FIGS. 30A, 30B and 31. The same reference symbols in FIG. 29 are also used in FIGS. 30A, 30B and 31. As described above, in the system of the present invention, the functional models necessary in business (which may be referred to as functional blocks or functional parts) have been standardized.

When the blocks of the functional models are shown on the screen and the desired block is selected, the slips, forms, and others (generally called worksheets) related to the block are displayed. Then, the desired slip and form are selected, the slip and form become active in use now. A slip or a form into which no data is entered is recognized as unused on the computer. As for the functional models, the relevant model is selected. As long as no data is entered into the block, the block is recognized as the block of an used functional model on the computer. When other related functional models become active, some functional blocks become active automatically. For example, as explained earlier, the worksheets for the functional blocks related to each other, like the personnel ledger and the place-of-work ledger, might become active automatically.

Therefore, with the quickly adaptable computer of the present invention, the user displays the systematized business functional models on the screen, selects the block of the desired functional model, and actually uses the slips and ledgers registered in the functional block, thereby reflecting the user's business on the screen automatically.

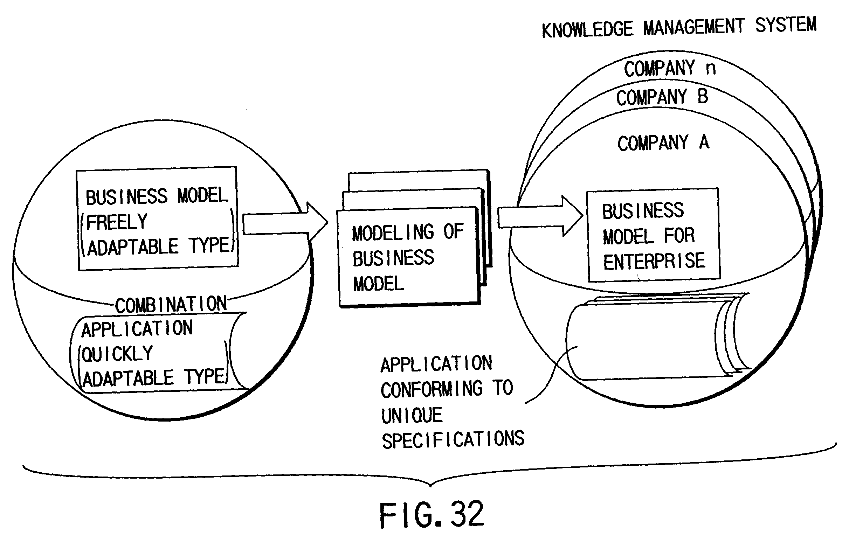

FIG. 32 is a conceptual diagram of what has been explained above. A business model (of the freely adaptable type) corresponds to the systematic part of the functional block explained in FIGS. 30A, 30B and 31. An application (of the quickly adaptable type) corresponds to the system controlled by entering the data into the slips and ledgers explained in FIGS. 1A to 18. Immediately after a personal computer is purchased, the user can display the functional blocks necessary to the company and enter the data into the slips and ledgers in the necessary blocks, thereby constructing a computer system suitable for the company. Company A, company B, ... at right in FIG. 32 show the state after they each have constructed their own computer systems.

The reason why they have succeeded in realizing such computer systems is that business terms have been standardized in meanings and contents. That is, as explained earlier, this is because the data structure is such that entering the data into the slips and ledgers determine the contents of the data processing automatically according to the fields into which the data is entered.

Because the above data process is done in constructing the system of FIG. 20, that is an example of adding new pieces of information when pieces of information are inputted one after another. In company management, however, employees are transferred to new positions, their change work of place is changed, or the company structure is changed. In that case, the entire system is set in the system modify mode. Then, the functional block that wants modifications is selected. The data is entered again into the slips and forms included in the functional block, thereby modifying the block. When an unused functional block appears, all the data items written in the functional block have only to be made zero or cleared.

As described above, the present invention comprises first display means, second display means, third display means, and interlocking control means. The first display means has items for functional blocks organized as units in business and displays an item menu for the functional blocks as a result of a call operation. The items of jobs done in the organizations of the functional blocks are classified. Names are given to the jobs in such a manner that the job names have meanings in business and suggest their contents. The items are defined as worksheets into which working data is entered. The second display means has the job items and displays a menu for the job items included in the selected functional block, when any one of the functional blocks displayed on the first display means is selected. The third display means displays the worksheet corresponding to the item, when any one of the job items displayed on the second display means. The interlocking control means not only superimposes the input data on the worksheet displayed on the third display means, but also supplies the update information to the information transmission destination included in the worksheet.

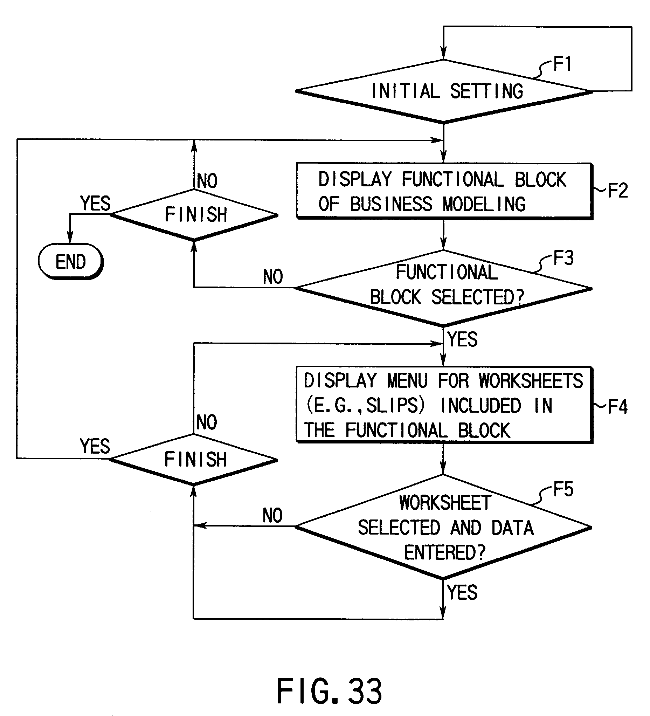

FIG. 33 shows the operation at the start-up when initial setting is done in a case where a computer system of the present invention has been purchased as a terminal. When the initial setting mode is turned on, the business modeling function block is displayed in the form of a menu on the screen (steps F1 and F2). This is done under the control of the system setting control section 8000 of FIG 14. The functional block is the outermost functional block shown in FIG. 29, which includes personnel, salary, accounting, financial affairs, production control, sales physical distribution, customer information, marketing, and networking. When the user selects the desired functional block (or the functional block possibly needed for the user's business), the items for the worksheets (including slips and ledgers) necessary for various jobs done in the functional block are displayed in the form of a menu screen (steps F3 and F4). On the second-stage menu screen, various slips and forms for jobs and rules are displayed. Here, the user enters the necessary data into the desired worksheet. For example, the above-described employees' ledger or the like is created. Alternatively, at the sales division, information on sales authority (e.g., the largest turnover) is entered for each person in charge (step F5).

As described above, entering the data enables a company structure to be designed automatically on the computer. When the busy mode is turned on, the system is brought into the in-operation state. After using the system, when the user think that the functional blocks are insufficient, the user should turn on the setting mode and select and add functional blocks. For example, this is a case where a company that engaged in only sales begins to process parts.

After the business initial setting has been done on the computer as described above, when the busy mode is turned on, for example, the active functional blocks are displayed on the screen. This makes it easy for the user to understand the functions used for work.

The present invention is not limited to the above embodiment, which is representative only for the explanation of the basic idea.

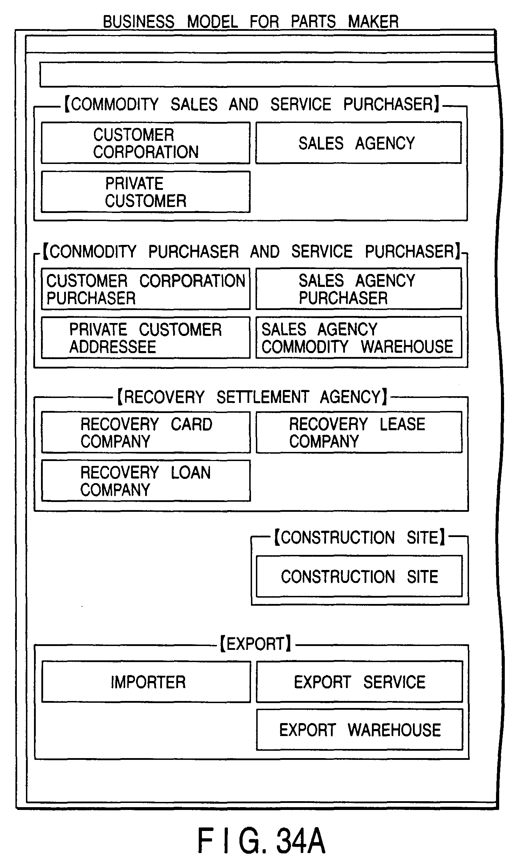

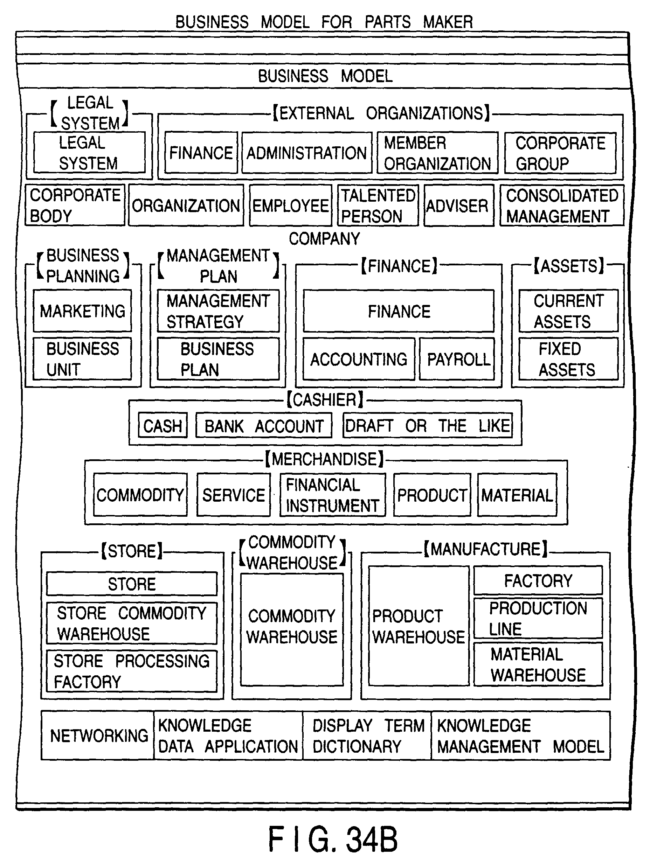

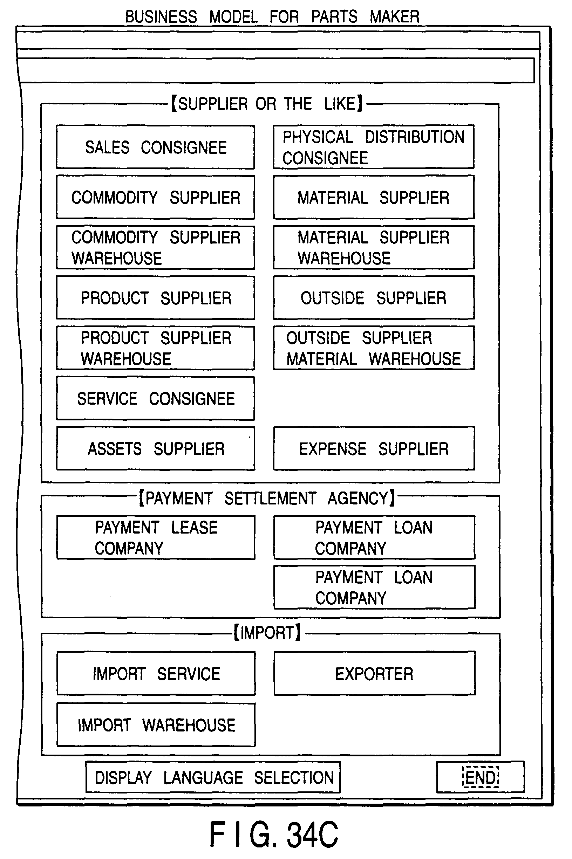

FIGS. 34A, 34B and 34C show an example of a functional block displayed in the initial setting mode.

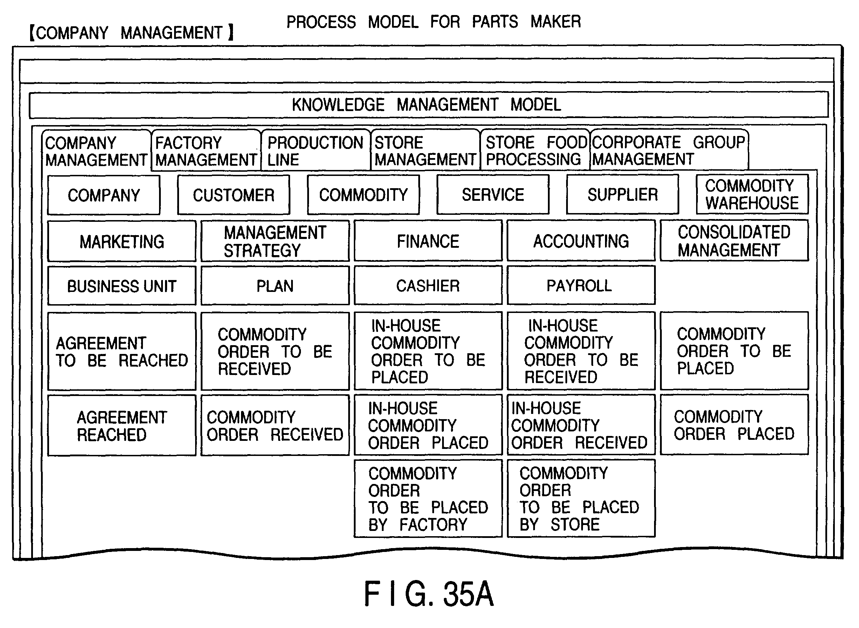

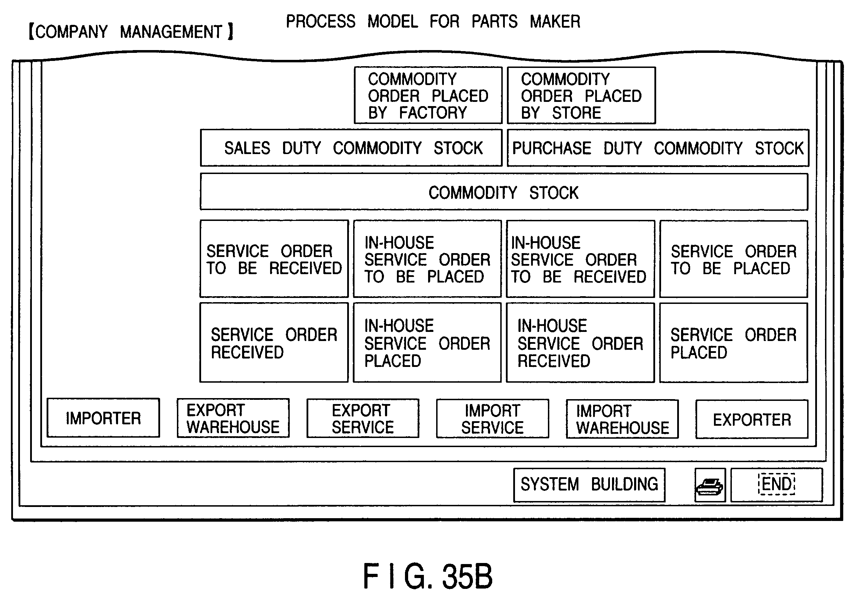

Now, an intelligent management model is assumed to have been selected. Then, as shown in FIGS. 35A and 35B, the model design panel for any one of company management, factory management, production line, store management, store food processing, and corporate group management can be selected.

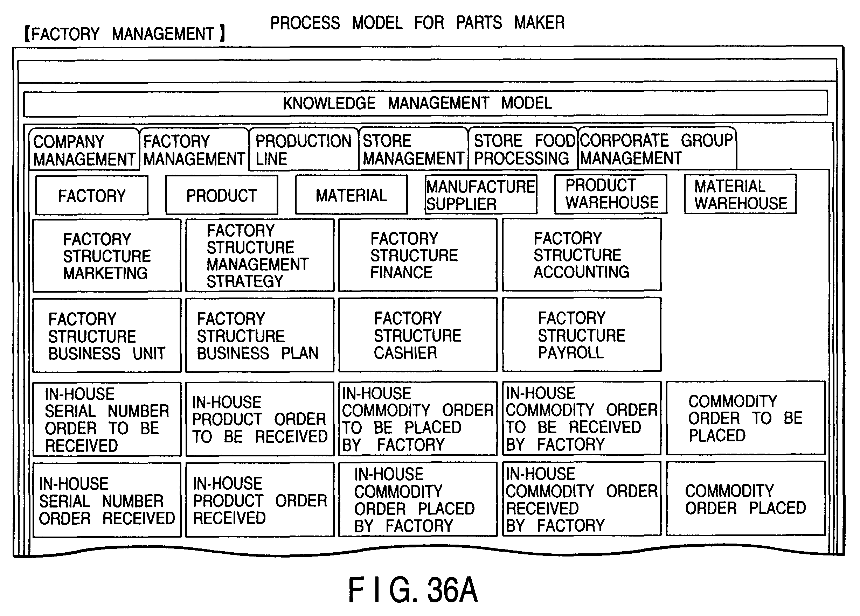

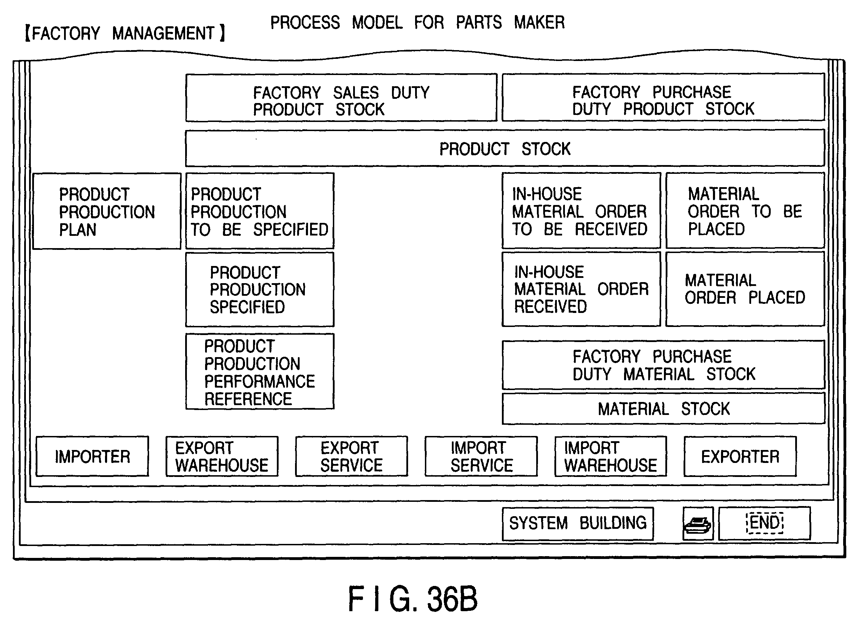

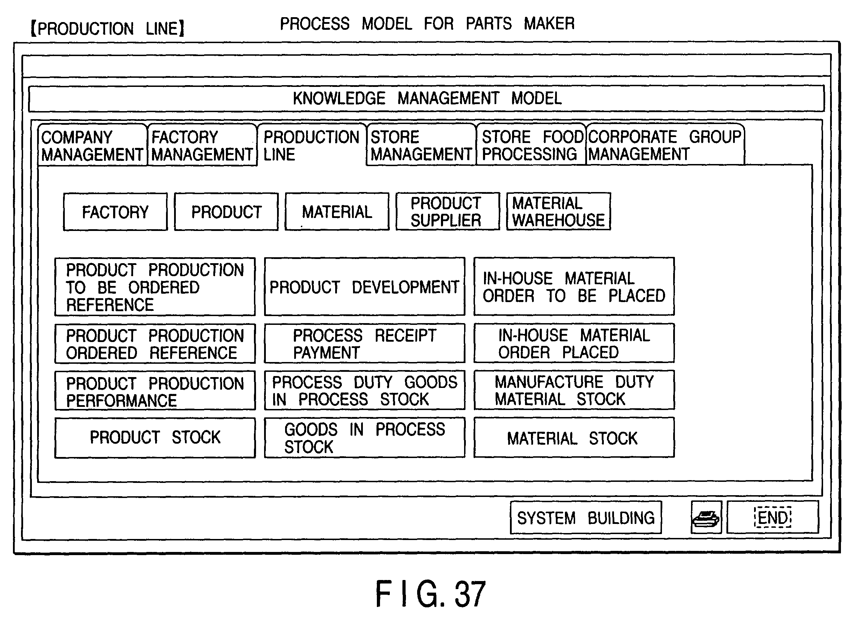

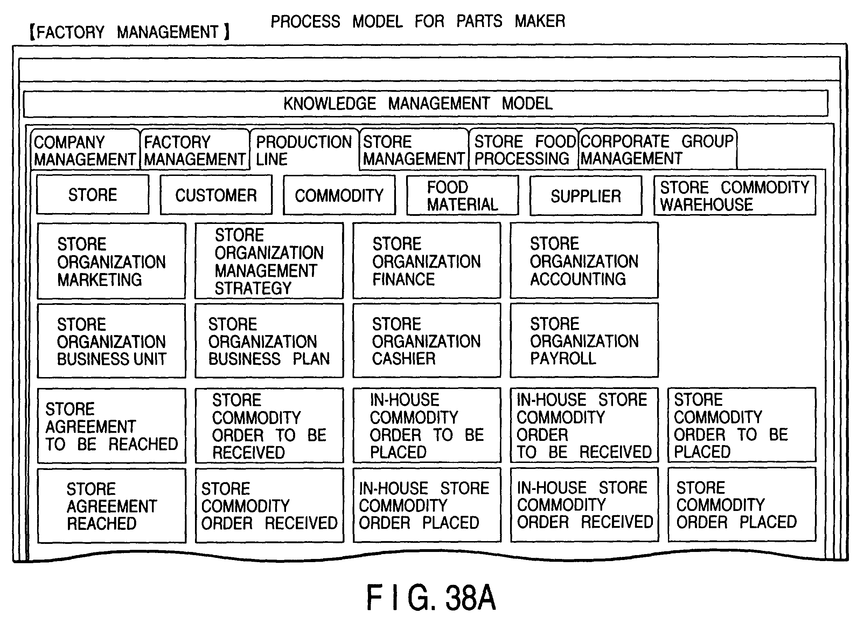

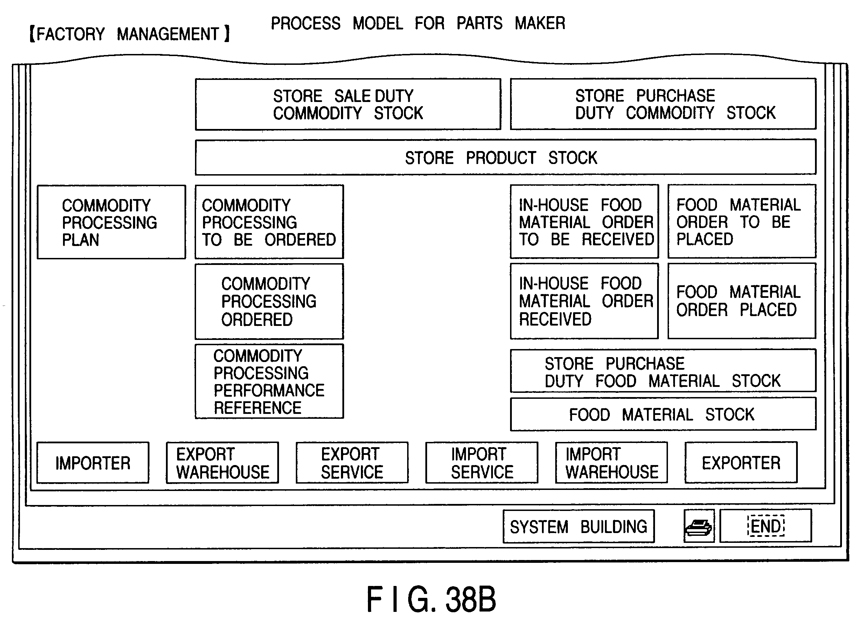

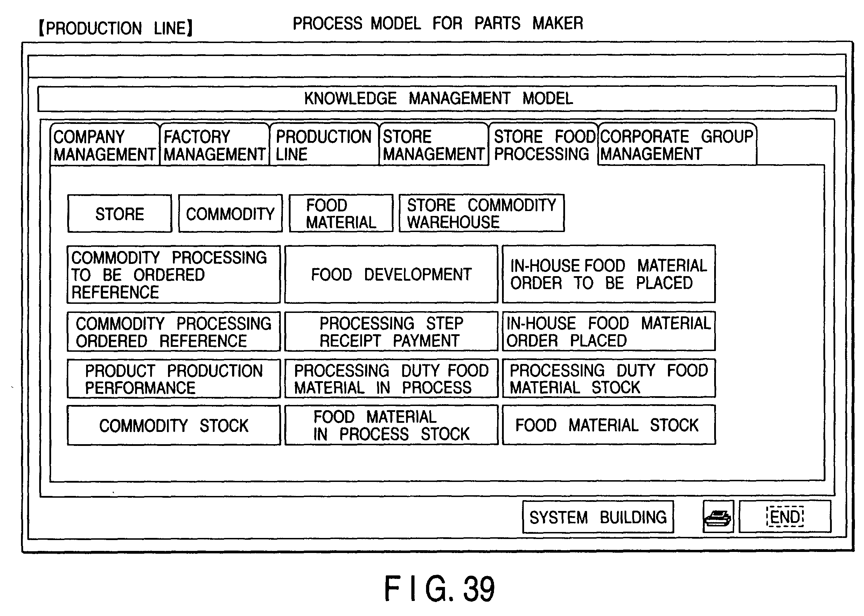

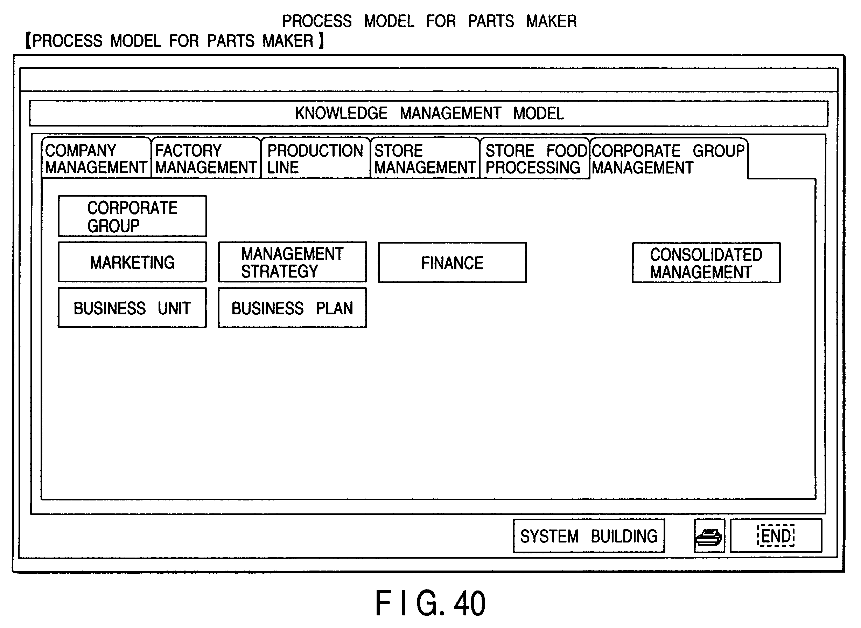

FIGS. 35A and 35B show a state where the company management panel has been selected and opened. FIGS. 36A and 36B show a state where the factory management panel has been selected and opened. FIG. 37 shows a state where the production line panel has been selected and opened. FIGS. 38A and 38B show a state where the store management panel has been selected and opened. FIG. 39 shows a state where the store food processing panel has been selected and opened. FIG. 40 shows a state where the corporate group management panel has been selected and opened.

Each panel further has classification items. When any one of the items is selected, the types of worksheets used under the item are displayed.

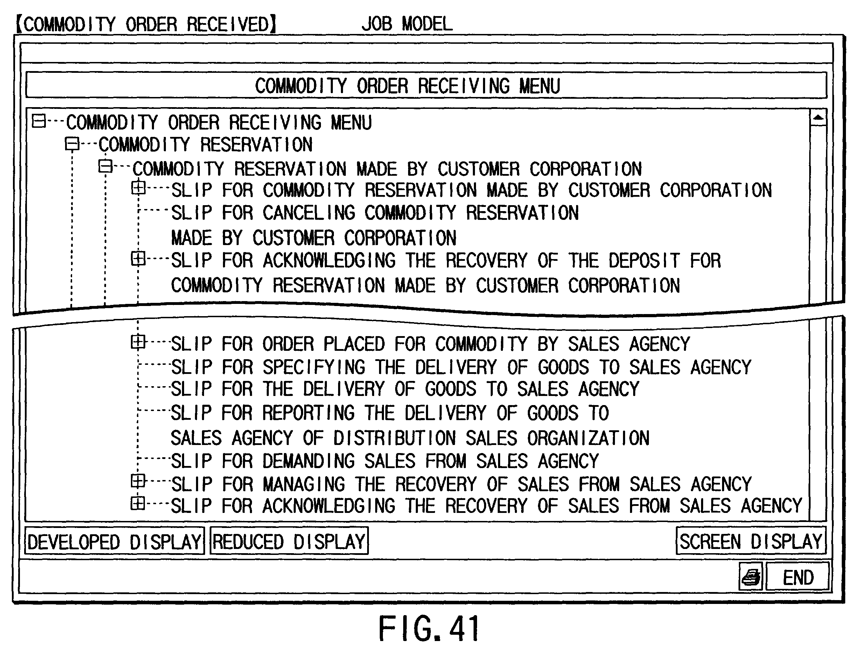

FIG. 41 shows an example of various types of slips displayed when the item "RECEIVING ORDERS FOR GOODS" is selected under the items of FIGS. 35A and 35B. In this state, when a slip is selected and the data is entered, the business items to which the slip belongs become active.

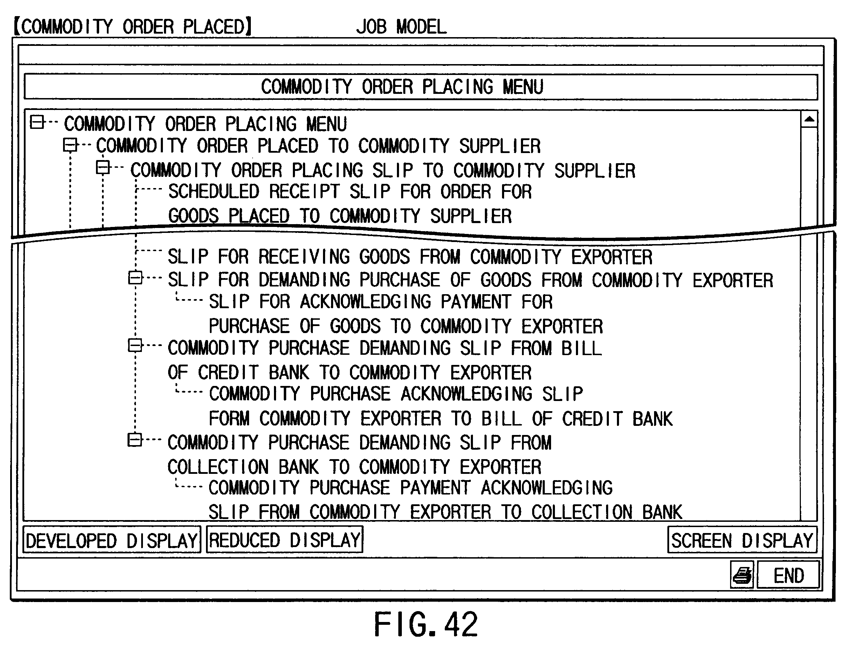

FIG. 42 shows an example of various types of slips displayed when the item "PLACING ORDERS FOR GOODS" is selected under the items of FIGS. 35A and 35B. In this state, when a slip is selected and the data is entered, the business items to which the slip belongs become active.

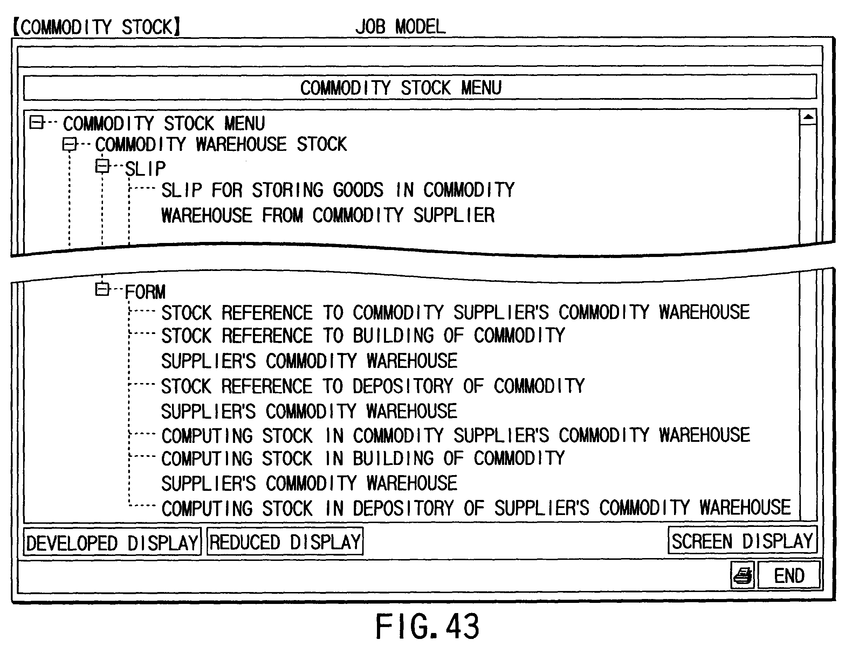

FIG. 43 shows an example of various types of slips displayed when the item "GOODS IN STOCK " is selected under the items of FIGS. 35A and 35B. In this state, when a slip is selected and the data is entered, the business items to which the slip belongs become active.

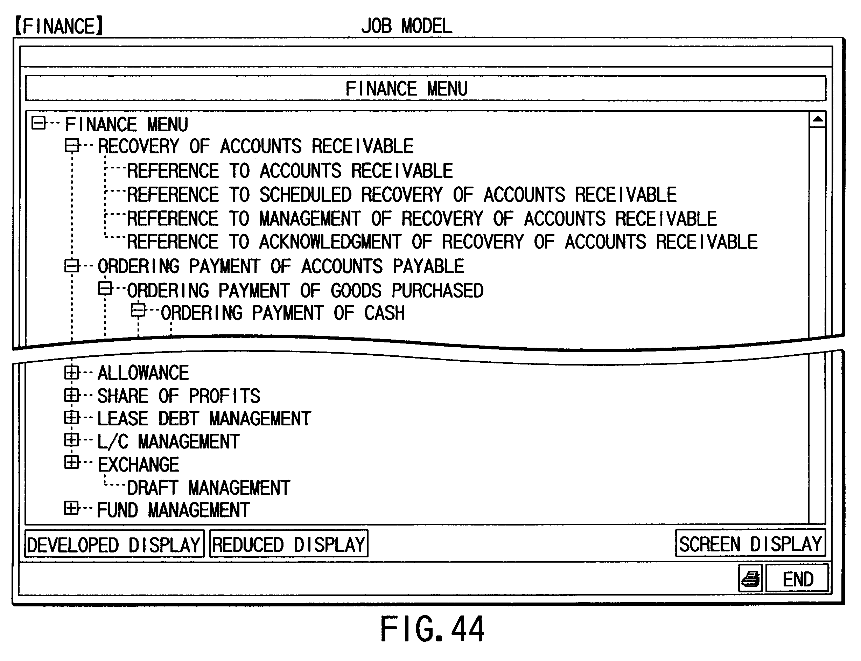

FIG. 44 shows an example of various types of slips displayed when the item "FINANCE" is selected under the items of FIGS. 34A, 34B and 34C. In this state, when a slip is selected and the data is entered, the business items to which the slip belongs become active.

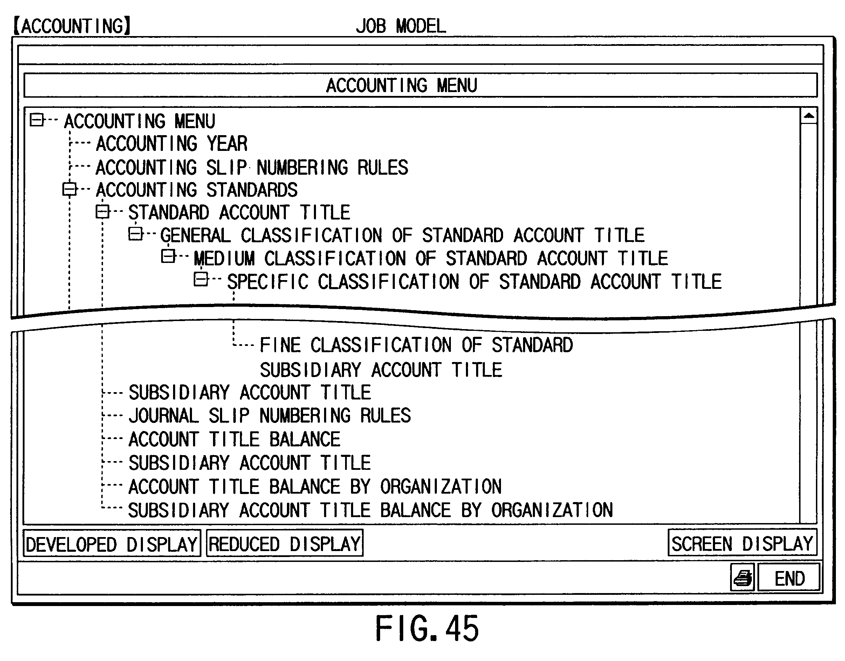

FIG. 45 shows an example of various types of slips displayed when the item "ACCOUNTING" is selected under the items of FIGS. 34A, 34B and 34C. In this state, when a slip is selected and the data is entered, the business items to which the slip belongs become active.

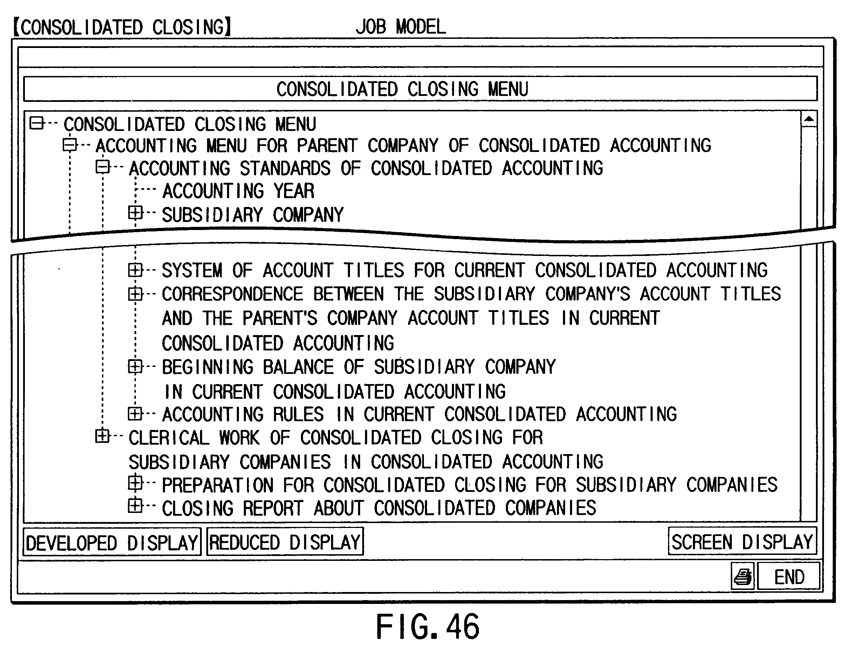

FIG. 46 shows an example of various types of slips displayed when the item "CONSOLIDATED MANAGEMENT" is selected under the items of FIG. 34A, 34B and 34C or 40. In this state, when a slip is selected and the data is entered, the business items to which the slip belongs become active.

Although in the above explanation, the present invention has been structured of blocks by means of a computer system, the control file having the important function of the invention may, of course, be recorded on a recording medium (e.g., an optical disk or a magnetic disk).

Specifically, the recording medium includes:

   a first display control file which has the items for business functional blocks organized as units in business and displays a menu for the items of the business functional blocks on a display by a call operation;

   a second display control file which classifies and has the items of jobs done in the organizations of the functional blocks, the items of jobs being given names in such a manner that the job names have meanings in business and suggest their contents and further being defined as worksheets into which working data is entered, and which displays a menu for the job items included in the selected functional block, when any one of the business functional blocks displayed on the display on the basis of the first display control file is selected;

a third display control file which displays the worksheet corresponding to the item, when any one of the job items displayed on the display on the basis of the second display control file; and

an interlocking control file which not only superimposes the input data on the worksheet displayed on the basis of the third display control file, but also supplies the update information to the information transmission destination included in the worksheet.

The application of the present invention is not limited to the above embodiment. While in the above explanation, the computer body subjected to initial setting or the recording medium includes all the business functional blocks, the information recording medium may be provided for a provider through a network.

A user who has made a contract may take in the necessary menu information through the network, construct a business model as explained in FIGS. 29 to 40, and load the data in the necessary business block and worksheets into the user's computer. The system of the present invention has a communication function and can take in cells. Therefore, by constructing the functional blocks and various worksheets in the direction of the Z-axis of the cell, a unique business model can be obtained and put into operation.

As described above, according to the present invention, there are provided a business support system, a business support method, and a business support data recording medium which realize a computer with a large-scale, high-speed totalizing function. Furthermore, according to the present invention, there are provided a business support system, a business support method, and a business support data recording medium which are highly reliable because the data is compensated for by another computer even if any microcomputer terminal has failed. In addition, it is possible to provide a business support system, a business support method, and a business support data recording medium which enable the past data to be stored immediately, even if a new microcomputer is added to the network.

## Claims

1.  A business support system comprising a device which is connected via a network to a device at the called party wherein the device includes;

    the same data structure (7000) in its own data storage section as that in the data storage section of the called party's device;
    transmitting means (216) for transmitting the updated data and its storage location to the called party, when the data in its own data storage section is updated, and
    receiving means (214) for replacing the data in its own data storage section with the received data, when the updated data and its storage location are received from the called party.

2.  The business support system according to claim 1, characterized by further comprising display means (4000) for displaying the contents of the updated data.

3.  The business support system according to claim 1, characterized in that the data structure is such that a control cell sets an X-axis, a Y-axis, a Z-axis, and a G-axis, an intelligent data cell stores real data or computing expressions in an address specified by the control cell, and

    a parameter on the X-axis of said control cell can specify from a large area to a small area, a parameter on the Y-axis can specify from a large organization to an individual, a parameter on the Z-axis can specify various types of slips and totalizing and analizing sheets, and a parameter on the G-axis can specify a day.

4.  The business support system according to claim 3, characterized in that the address information on the slip determined by a parameter on said Z-axis further includes address information on the destination to which the update flag is transmitted, when the real data in the slip is updated.

5.  The business support system according to claim 3, characterized in that the address information on the slip determined by a parameter on said Z-axis includes pieces of information indicating an area specifying the address for the result of calculation, an area specifying the address for a computing expression used, an area specifying the address for the data used in calculation, an area specifying the address for the data determining whether to do calculations, and an area specifying the address for the destination to which the update flag is transmitted.

6.  A business support recording medium on which control data (1000) and real data (2000) that control a device (3000, 4000, 5000) at the calling party connected via a network to a device at the called party are stored, and on which

transmitting control data which has the same data structure as that of a recording medium driven at said called party and transmits the updated data and its storage location to the called party, when the data in the calling party's data storage section is updated, and
receiving control data which replaces the data in said calling party's data storage section with the received data, when the updated data and data indicating its storage location are received from the called party are stored, and
which controls the calling party's device.

7. The business support recording medium according to claim 6, characterized in that display control data for displaying the contents of the updated data is further recorded on the recording medium.

8. The business support recording medium according to claim 6, characterized in that the data structure is such that a control cell sets an X-axis, a Y-axis, a Z-axis, and a G-axis, an intelligent data cell stores real data or computing expressions in an address specified by the control cell, and

a parameter on the X-axis of said control cell can specify from a large area to a small area, a parameter on the Y-axis can specify from a large organization to an individual, a parameter on the Z-axis can specify various types of slips and totalizing sheets, and a parameter on the G-axis can specify a day.

9. The business support recording medium according to claim 8, characterized in that the address information on the slip determined by a parameter on said Z-axis further includes address information on the destination to which the update flag is transmitted, when the real data in the slip is updated.

10. The business support recording medium according to claim 8, characterized in that the address information on the slip determined by a parameter on said Z-axis includes pieces of information indicating an area specifying the address for the result of calculation, an area specifying the address for a computing expression used, an area specifying the address for the data used in calculation, an area specifying the address for the data determining whether to do calculations, and an area specifying the address for the destination to which the update flag is transmitted.

11. A business support system characterized by comprising:

first display means which has the items for business functional blocks organized as units in business and displays a menu for the items of the business functional blocks by a call operation;
second display means which classifies and has the items of jobs done in the organizations of the business functional blocks, the items of jobs being given names in such a manner that the job names have meanings in business and suggest their contents and further being defined as worksheets into which working data is entered, and which displays a menu for the job items included in the selected functional block, when any one of said business functional blocks displayed on said first display means is selected;
third display means which displays the worksheet corresponding to the item, when any one of said job items displayed on the second display means; and
interlocking control means which not only superimposes the input data on the worksheet displayed on said third display means, but also supplies the update information to the information transmission destination included in the worksheet.

12. The business support system according to claim 11, characterized in that said worksheet is any one of a slip, a ledger, and a form.

13. The business support system according to claim 11, characterized in that the information transmission destination in said worksheet indicates a worksheet belonging to a business functional block different from the business functional block to which said worksheet belongs.

14. A business support recording medium includes:

a first display control file which has the items for business functional blocks organized as units in business and displays a menu for the items of the business functional blocks on a display by a call operation;
a second display control file which classifies and has the items of jobs done in the organizations of the business functional blocks, the items of jobs being given names in such a manner that the job names have meanings in business and suggest their contents and further being defined as worksheets into which working data is entered, and which displays a menu for the job items included in the selected functional block, when any one of the business functional blocks displayed on the display on the basis of the first display control file is selected;

a third display control file which displays the worksheet corresponding to the item, when any one of the job items displayed on the display on the basis of the second display control file; and

an interlocking control file which not only superimposes the input data on the worksheet displayed on the basis of said third display control file, but also supplies the update information to the information transmission destination included in the worksheet.

15. The business support recording medium according to claim 14, characterized in that said worksheet is any one of a slip, a ledger, and a form.

16. The business support recording medium according to claim 14, characterized in that the information transmission destination in said worksheet indicates a worksheet belonging to a business functional block different from the business functional block to which said worksheet belongs.

17. A business support system which takes in

a first display control file which has the items for business functional blocks organized as units in business and displays a menu for the items of the business functional blocks on a display by a call operation;

a second display control file which classifies and has the items of jobs done in the organizations of the business functional blocks, the items of jobs being given names in such a manner that the job names have meanings in business and suggest their contents and further being defined as worksheets into which working data is entered, and which displays a menu for the job items included in the selected functional block, when any one of the business functional blocks displayed on the display on the basis of the first display control file is selected;

a third display control file which displays the worksheet corresponding to the item, when any one of the job items displayed on the display on the basis of the second display control file; and

an interlocking control file which not only superimposes the input data on the worksheet displayed on the basis of the third display control file, but also supplies the update information to the information transmission destination included in the worksheet, and

which stores them onto a recording medium in the system.

18. The business support system according to claim 17, characterized in that said worksheet is any one of a slip, a ledger, and a form.

19. The business support system according to claim 17, characterized in that the information transmission destination in said worksheet indicates a worksheet belonging to a business functional block different from the business functional block to which said worksheet belongs.

X···AREA
Y···ACTING BODY
Z···SLIPS, TABLES, AND OTHERS

FIG. 1A

$X = \{x1\,(\quad),\ x2\,(\quad),\ x3\,(\quad),\ \cdots\}$

FIG. 1B

20

EP 1 074 921 A2

y1 (  )  y2 (  )  y3 (  )  y4 (  )  y5 (  )  y6 (  )  y7 (  )

| y1 ( ) | y2 ( ) | y3 ( ) | y4 ( ) | y5 ( ) | y6 ( ) | y7 ( ) |
|---|---|---|---|---|---|---|
| COMPANY | USER'S OWN COMPANY | HEAD OFFICE | DIVISION | DEPARTMENT | SECTION | PERSON IN CHARGE |
| ASSOCIATION | OTHER COMPANY | BRANCH OFFICE | DIVISION | DEPARTMENT | SECTION | PERSON IN CHARGE |
| GROUP |  | ... | ... | ... | SECTION | PERSON IN CHARGE |
|  |  | COMPANY A |  |  | ... | ... |
|  |  | COMPANY B |  | DEPARTMENT | ... |  |
|  |  | ... |  |  |  |  |

FIG. 2

z1 ( )

| |
|---|
| SALES SLIP |
| ORDER PLACED SLIP |
| ORDER RECEIVED SLIP |
| . . . |
| . . . |
| ACCOUNTS PAYABLE SLIP |
| AMOUNT RECOVERABLE SLIP |
| ACCOUNTS PAID SLIP |
| AMOUNT RECOVERED SLIP |
| ACCOUNT RECEIVABLE SLIP |
| SALES QUANTITY SLIP |
| INVENTORY TABLE |
| BALANCE SHEET |
| . . . |

z2 ( )

| |
|---|
| COMMODITY $\alpha$ |
| COMMODITY $\beta$ |
| COMMODITY $\theta$ |
| COMMISSION |
| . . . |
| . . . |

z3 ( )

| |
|---|
| CUSTOMER A |
| CUSTOMER B |
| CUSTOMER C |
| . . . |
| . . . |
| . . . |

FIG. 3

EP 1 074 921 A2

| SALES SLIP NO. | | SELLING DAY | YEAR | MONTH | DAY |
|---|---|---|---|---|---|
| PERSON IN CHARGE | | PURCHASER | | | |
| COMMODITY CODE | | | | | |
| QUANTITY | UNIT PRICE | | | | |
| AMOUNT OF MONEY | | | | | |
| RECEIPT       YES       NO | | | | | |
| SCHEDULED RECOVERY DAY    YEAR    MONTH    DAY | | AMOUNT RECOVERED    YES    NO | | | |
| CREDIT CARD NO. | | | | | |

( OK )( NEXT PAGE )( END )

# FIG. 4

DATA ACCESS CONTROL CELL
1000

INTELLIGENT DATA CELL
2000

FIG.5

DATA CELL 2000

REAL DATA

| SALES SLIP COMMODITY $\alpha$ | |
|---|---|
| AMOUNT OF MONEY(MT) | (ADDRESS) |
| QUANTITY(NN) | (ADDRESS) |
| UNIT PRICE | (ADDRESS) |
| COMPUTING EXPRESSION (1) | (ADDRESS) |
| COMPUTING EXPRESSION (2) | (ADDRESS) |
| AMOUNT OF MONEY(MS) | (ADDRESS) |
| QUANTITY(NS) | (ADDRESS) |
| ACCEPTANCE | (ADDRESS) |
| UPDATE FLAG | (ADDRESS) |
| UPDATE FLAG | (ADDRESS) |
| . . . . . . | |
| TRANSMISSION DESTINATION | (ADDRESS) |
| UPDATE FLAG | (ADDRESS) |
| UPDATE FLAG | (ADDRESS) |
| . . . . . . | |

$T \leftarrow T+N$

FIG. 6

EP 1 074 921 A2

FIG. 7

EP 1 074 921 A2

DEPARTMENT'S SALES

| |
|---|
| AMOUNT OF MONEY (MT) |
| QUANTITY (NT) |
| COMPUTING EXPRESSION 1 |
| COMPUTING EXPRESSION 2 |
| AMOUNT OF MONEY (MS) |
| AMOUNT OF MONEY (MS) |
| AMOUNT OF MONEY (MS) |
| ... |
| QUANTITY (NS) |
| QUANTITY (NS) |
| QUANTITY (NS) |
| ... |
| ACCEPTANCE |
| UPDATE FLAG |
| UPDATE FLAG |
| UPDATE FLAG |
| ... |
| TRANSMISSION DESTINATION |
| UPDATE FLAG |
| UPDATE FLAG |
| UPDATE FLAG |
| ... |

ANOTHER SECTION
ANOTHER SECTION

ANOTHER SECTION
ANOTHER SECTION

ANOTHER SECTION
ANOTHER SECTION

TO COMPANY'S SALES AMOUNT

SECTION'S SALES

| |
|---|
| AMOUNT OF MONEY (MT) |
| QUANTITY (NT) |
| COMPUTING EXPRESSION 1 |
| COMPUTING EXPRESSION 2 |
| AMOUNT OF MONEY (MS) A |
| AMOUNT OF MONEY (MS) B |
| AMOUNT OF MONEY (MS) C |
| QUANTITY (NS) A |
| QUANTITY (NS) B |
| QUANTITY (NS) C |
| ACCEPTANCE |
| UPDATE FLAG A |
| UPDATE FLAG B |
| UPDATE FLAG C |
| TRANSMISSION DESTINATION UPDATE FLAG ... |

PERSON IN CHARGE A

| |
|---|
| AMOUNT OF MONEY (MT) |
| QUANTITY (NT) |
| COMPUTING EXPRESSION 1 COMPUTING EXPRESSION 1 |
| AMOUNT OF MONEY (MS) |
| QUANTITY (NS) |
| TRANSMISSION DESTINATION UPDATE FLAG ... |

SECTION'S SALES

TO SALES LEDGER
BY COMMODITY
TO INVENTORY MANAGEMENT LEDGER

FIG. 8

CONTROL CELL  CONTROL CELL  CONTROL CELL  CONTROL CELL  CONTROL CELL

INTELLIGENT  INTELLIGENT  INTELLIGENT  INTELLIGENT  INTELLIGENT
DATA CELL    DATA CELL    DATA CELL    DATA CELL    DATA CELL

$-g2$ ( )    $-g1$ ( )    $g0$ ( )    $+g1$ ( )    $+g2$ ( )    G-AXIS

# FIG. 9

EP 1 074 921 A2

EP 1 074 921 A2

MARCH 15          MARCH 20          APRIL 10

1ST ISSUED AMOUNT
RECOVERABLE SLIP

2ND ISSUED AMOUNT
RECOVERABLE SLIP

AMOUNT RECOVERED SLIP      α PRESENT      β ABSENT

RECOVERY CHECK TABLE

BILLING TABLE

RECEIPT SLIP

FIG. 10

OFFICE WORK PROCESSING FLOW OF SALE
DISTRIBUTION THROUGH BUSINESS COMPANY

| CUSTOMER | SALES DEPARTMENT | ACCOUNTING DEPARTMENT | | |
|---|---|---|---|---|
| | SALES | FINANCE | CASHIER | ACCOUNTING |
| PURCHASE ORDER | ORDER RECEIVED SLIP | AMOUNT RECOVERABLE SLIP (1) | | |
| | DELIVERY SLIP | AMOUNT RECOVERABLE SLIP (2) | | JOURNAL SLIP (RECORDING ACCOUNT RECEIVABLE) |
| | BILL SLIP | | | |
| | | AMOUNT RECOVERABLE SLIP (3) | | |
| | PAYING INTO BANK/DRAFT/CASH | | RECEIPT SLIP | |
| | VOUCHING | | | |
| | RECOVERY MANAGEMENT SLIP | | | JOURNAL SLIP (RECORDING ACCOUNT RECOVERED) |
| | RECOVERY ACKNOW- LEDGMENT SLIP | | | |

FIG. 11

## OFFICE WORK PROCESSING FLOW OF PURCHASE
## DISTRIBUTION THROUGH BUSINESS COMPANY

| ACCOUNTING DEPARTMENT | | | SALES DEPARTMENT | SUPPLIER |
|---|---|---|---|---|
| FINANCE | CASHIER | ACCOUNTING | PURCHASE | |

ACCOUNTS PAYABLE SLIP (1)

ORDER PLACED SLIP

ACCOUNTS PAYABLE SLIP (2)

RECEIVING SLIP

ACCOUNTS PAYABLE SLIP (3)

JOURNAL SLIP (RECORDING ACCOUNTS PAYABLE)

PURCHASE CLAIM SLIP

BILL

ACCOUNTS PAID SLIP

STATEMENT OF DELIVERY

PAYMENT SPECIFY-ING SLIP (2)

PAYING INTO
BANK/DRAFT/CASH

HANDING OVER DATA

PAYMENT SLIP

JOURNAL SLIP (RECORDING ACCOUNTS PAID)

FIG. 12

HOME
COUNTRY HEAD OFFICE

BRANCH
OFFICE 5002

5001

FOREIGN
COUNTRY 2

NETWORK

HEAD OFFICE 5004

FOREIGN COUNTRY 1

BRANCH
OFFICE 5003

FIG.13

EP 1 074 921 A2

FIG. 14

EP 1 074 921 A2

```
          ┌─────────────┐
          │    START    │──A1
          └──────┬──────┘
                 │←─────────────────────────┐
                 ▼                          │
          ╱─────────────────────╲      NO   │
         ╱    UPDATING DONE?      ╲─────────┘
         ╲                       ╱
          ╲─────────────────────╱
                 │  ─A2
              YES│
                 ▼
    ┌──────────────────────────────────────┐
    │ DETERMINE TRANSMISSION DESTINATION FROM│──A3
    │ A LIST OF TRANSMISSION DESTINATIONS    │
    └──────────────────┬─────────────────────┘
                       ▼
    ┌──────────────────────────────────────┐
    │ COPY THE INTELLIGENT DATA CORRESPONDING│──A4
    │ TO X-, Y-, Z-, AND G-AXIS PARAMETERS TO│
    │ BE TRANSMITTED INTO TRANSMISSION MEMORY│
    └──────────────────┬─────────────────────┘
                       ▼
    ┌──────────────────────────────────────┐
    │   CONVERT THEM INTO TRANSMISSION DATA  │──A5
    └──────────────────┬─────────────────────┘
                       │←─────────────────────┐
                       ▼                      │
    ┌──────────────────────────────────────┐ │
    │       CALL TRANSMISSION DESTINATION    │ │
    └──────────────────┬─────────────────────┘ │
                       │  ─A6                   │
                       ▼                        │
          ╱─────────────────────╲      NO       │
         ╱    TRANSMISSION OK?    ╲─────────────┘
         ╲                       ╱
          ╲─────────────────────╱
                 │  ─A7
              YES│
                 ▼
    ┌──────────────────────────────────────┐
    │              TRANSMISSION              │──A8
    └──────────────────┬─────────────────────┘
                       ▼
    ┌──────────────────────────────────────┐
    │         CLEAR TRANSMISSION MEMORY      │──A9
    └──────────────────┬─────────────────────┘
                       ▼
          ┌─────────────┐
          │     END     │
          └─────────────┘
```

FIG. 15

START ~B1

CALL PRESENT? ~B2

NO

YES

SEND RECEPTION OK RESPONSE ~B3

RECEIVE DATA ~B4

IS DATA CELL DATA? ~B5

NO

YES

REPLACE THE DATA IN INTELLIGENT DATA CELL WITH RECEIVED DATA USING RECEIVED X-, Y-, Z-, AND G-AXIS PARAMETERS ~B6

END

FIG. 16

FIG. 17

CONTROL CELL   CONTROL CELL   CONTROL CELL   CONTROL CELL   CONTROL CELL
INTELLIGENT    INTELLIGENT    INTELLIGENT    INTELLIGENT    INTELLIGENT
DATA CELL      DATA CELL      DATA CELL      DATA CELL      DATA CELL

G-AXIS

g0 ( )        +g1 ( )        +g2 ( )        +g3 ( )        +g4 ( )

WHOLE COMPANY
AMOUNT
RECOVERABLE SLIP
TOTALIZATION

WHOLE COMPANY
ACCOUNTS
PAYABLE SLIP
TOTALIZATION

FIG.18

EP 1 074 921 A2

FIG. 19

PURCHASING — D1

↓

MODELING — D2

↓

RULE SETTING — D3

↓

APPLYING (CONSTRUCTING) — D4

FIG. 20

EMPLOYEES' LEDGER 4000

| EMPLOYEE CODE | NAME | DATE OF BIRTH | AGE | POST | PLACE OF WORK | SALARY | HOMETOWN | ALMA MATER | FAMILY STRUCTURE | OTHERS |
|---|---|---|---|---|---|---|---|---|---|---|
| ○○ | ○○ | ○○ | ○○ | ○○ | ○○ | ○○ | ○○ | ○○ | ○○ | |
| ×× | ×× | ×× | ×× | ×× | ×× | ×× | ×× | ×× | ×× | |
| △△ | △△ | △△ | △△ | △△ | △△ | △△ | △△ | △△ | △△ | |

FIG. 21A

TEMPORARY EMPLOYEE 4000

| EMPLOYEE CODE | NAME | DATE OF BIRTH | AGE | POST | PLACE OF WORK | SALARY | HOMETOWN | ALMA MATER | FAMILY STRUCTURE | OTHERS |
|---|---|---|---|---|---|---|---|---|---|---|
| ◇◇ | ◇◇ | ◇◇ | ◇◇ | ◇◇ | ◇◇ | ◇◇ | ◇◇ | ◇◇ | ◇◇ | |
| | | | | | | | | | | |
| | | | | | | | | | | |

FIG. 21B

FIG. 22

WHOLE EMPLOYEES' LEDGER

... ...

| | EMPLOYEE ⃝⃝ | TRANSMISSION DESTINATION INFORMATION |
|---|---|---|
| EMPLOYEE CODE | ⃝⃝ | DETAILED STATEMENT OF SALARY, PLACE OF WORK, ACCOUNTING LEDGER |
| NAME | ⃝⃝ | DETAILED STATEMENT OF SALARY, PLACE OF WORK, ACCOUNTING LEDGER |
| DATE OF BIRTH | ⃝⃝ | |
| AGE | ⃝⃝ | |
| POST | ⃝⃝ | DETAILED STATEMENT OF SALARY, PLACE-OF-WORK LEDGER |
| PLACE OF WORK | ⃝⃝ | PLACE-OF-WORK LEDGER |
| SALARY | ⃝⃝ | DETAILED STATEMENT OF SALARY, ACCOUNTING LEDGER |
| HOMETOWN | ⃝⃝ | LIST OF PERSONS FROM THE SAME TOWN |
| ALMA MATER | ⃝⃝ | LIST OF PERSONS FROM THE SAME TOWN |
| FAMILY STRUCTURE | ⃝⃝ | |
| OTHERS | | |

FIG. 23

ENTER WHOLE EMPLOYEES, LEDGER CREATION DATA — E1

SETUP MODE ON
AND WHOLE EMPLOYEES,
LEDGER CREATED? — E2

NO

YES

COUNT THE NUMBER OF EMPLOYEES AND PREPARE
AS MANY SALARY SLIPS AS EQUAL THE NUMBER
OF EMPLOYEES — E3

CREATE A DETAILED STATEMENT
OF SALARY FOR EACH EMPLOYEE
SPECIFY EMPLOYEE CODE POSITION
SPECIFY EMPLOYEE NAME POSITION
SPECIFY SALARY POSITION
SPECIFY ALLOWANCE DATA INPUT POSITION
SPECIFY OTHER DATA INPUT POSITION
SPECIFY PREMIUM DATA INPUT POSITION
SPECIFY AMOUNT OF TAX DATA INPUT POSITION
SPECIFY AMOUNT PAID INTO BANK POSITION — E4

FIG. 24

DATA STRUCTURE OF DETAILED
STATEMENT OF SALARY DATA

· · ·

· · ·

| EMPLOYEE CODE | |
|---|---|
| NAME | |
| SALARY | TRANSMISSION DESTINATION  ACCOUNTING LEDGER |
| ALLOWANCE | TRANSMISSION DESTINATION  ACCOUNTING LEDGER |
| OTHERS | TRANSMISSION DESTINATION  ACCOUNTING LEDGER |
| PREMIUM | TRANSMISSION DESTINATION  ACCOUNTING LEDGER |
| AMOUNT OF TAX | TRANSMISSION DESTINATION  ACCOUNTING LEDGER |
| | |
| AMOUNT PAID INTO BANK | TRANSMISSION DESTINATION  ACCOUNTING LEDGER |
| | |

FIG. 25

SALARY LEDGER FOR EACH EMPLOYEE IN ACCOUNTING

...

...

| EMPLOYEE CODE | ○○○○···○○○ | |
|---|---|---|
| NAME | ○○○○○ | |
| SALARY | | TRANSMISSION DESTINATION   DEPARTMENT'S AMOUNT PAID SLIP |
| ALLOWANCE | | TRANSMISSION DESTINATION   DEPARTMENT'S AMOUNT PAID SLIP |
| OTHERS | | TRANSMISSION DESTINATION   DEPARTMENT'S AMOUNT PAID SLIP |
| PREMIUM | | TRANSMISSION DESTINATION   PREMIUM PAID SLIP |
| AMOUNT OF TAX | | TRANSMISSION DESTINATION   DEPARTMENT'S AMOUNT OF TAX SLIP |
| | | |
| AMOUNT PAID INTO BANK | | TRANSMISSION DESTINATION<br>AMOUNT PAID INTO BANK SLIP BY BANK |
| | | |

FIG.26

EP 1 074 921 A2

TRANSMISSION FLOW OF SALARY PAYMENT AND
PAYING INTO BANK SLIPS IN ACCOUNTING

FIG. 27

PLACE-OF-WORK (E.G., SALES DEPARTMENT ) LEDGER
...
...

| EMPLOYEE | | TRANSMISSION DESTINATION INFORMATION |
|---|---|---|
| EMPLOYEE CODE | ○○○ | |
| NAME | ○○○ | ROUTING SLIP IN PLACE OF WORK |
| DATE OF BIRTH | | |
| AGE | | |
| POST | | ROUTING SLIP IN PLACE OF WORK |

## FIG. 28A

| ROUTING SLIP | CHECK | JOIN | NOT JOIN | REMARK |
|---|---|---|---|---|
| EMPLOYEE NAME | | | | |
| ...... | | | | |
| ...... | | | | |
| ...... | | | | |
| ...... | | | | |
| ...... | | | | |
| | | | | |
| ...... | | | | |

## FIG. 28B

FIG. 29

PRESIDENT

| | | | |
|---|---|---|---|
| PERSONNEL AND PAYROLL 500 | PERSONNEL AND PAYROLL | SALARY SLIP AND OFFICIAL WRITTEN NOTIFICATION | SALARY LEDGER |
| | RULES | SALARY COMPUTING RULES | PERSONNEL AND PAYROLL RULES |
| ACCOUNTING 510 | ACCOUNTING WORK | SALES SLIP<br>PURCHASE SLIP 501 | CONSOLIDATED CLOSING, CURRENCY CONVERSION, ASSET LEDGER, CLOSING TABLE 503 |
| | ACCOUNTING RULES | CONSUMPTION TAX 502 | INTERNATIONAL ACCOUNTING STANDARDS, ACCOUNTING YEAR, ACCOUNT TITLE 504 |
| FINANCE 520 | FINANCIAL WORK | PAYMENT SLIP, RECEIPT SLIP 521 | BALANCE PLAN, BALANCE PERFORMANCE 523 |
| | FINANCIAL RULES | CASH MANAGEMENT RULES 522 | ASSET MANAGEMENT RULES 524 |
| PRODUCTION MANAGEMENT 530 | MATERIAL DISTRIBUTION WORK | MATERIAL STORAGE SLIP, MATERIAL SHIPMENT SLIP 531 | MATERIAL STOCK PLAN 533 |

FIG. 30A

EP 1 074 921 A2

| PRODUCTION MANAGEMENT 530 | WORK REGULATIONS | MATERIAL RECEIVING LOT, PRODUCTION STOCK BASE 532 | SUPPLY BASE 534 |
|---|---|---|---|
| | PROCUREMENT | ORDER PLACED SLIP, ORDER PLACED WITH OUTSIDE SUPPLIERS 535 | PROCUREMENT PLAN 537 |
| | WORK REGULATIONS | MATERIAL ORDERING LOT, NO. OF DAYS REQUIRED TO PROCURE MATERIAL 536 | SUPPLIER LEDGER, MATERIAL LEDGER 538 |
| | MANUFACTURING WORK | PROCESS STORAGE SLIP, PROCESS SHIPMENT SLIP 539 | PRODUCTION PERFORMANCE, PRODUCTION PLAN 541 |
| | WORK REGULATIONS | PRODUCTION LOT OF 540 PRODUCTS, STANDARD NO. OF PROCESSES | STANDARD AMOUNT REQUIRED, PART DEVELOPMENT 542 |
| | PRODUCT DISTRIBUTION | PRODUCT STORAGE SLIP, PRODUCT SHIPMENT SLIP 543 | APPROPRIATE STOCK OF PRODUCT 545 |
| | WORK REGULATIONS | APPROPRIATE STOCK AT STOCK BASE 544 | STOCK BASE OF PRODUCTS 546 |

FIG. 30B

EP 1 074 921 A2

| | | | |
|---|---|---|---|
| | PRODUCT ORDER RECEIVING WORK | PRODUCT ORDER RECEIVING SLIP PRODUCT SALES SLIP 547 | ORDER RECEIVING PERFORMANCE ORDER RECEIVING PLAN 549 |
| | WORK REGULATIONS | PRICE BY QUANTITY OF PRODUCT 548 | PRODUCT LEDGER ORDER RECEIVING AUTHORITY 550 |
| PRODUCTION MANAGEMENT 560 | COMMODITY DISTRIBUTION WORK | SHIPMENT SLIP STORAGE SLIP 561 | DISTRIBUTION PLAN STORAGE INFORMATION 563 |
| | WORK REGULATIONS | COMMODITY RECEIVING SLOT NO. OF DAYS REQUIRED TO PROCURE COMMODITIES 562 | ORDER WITH OUTSIDE 564 SUPPLIERS LEDGER INVENTORY MANAGEMENT RULES |
| | ORDERING AND PURCHASING WORK | ORDER PLACED SLIP PURCHASE SLIP 565 | ACCOUNTS PAYABLE MANAGEMENT PURCHASE PLAN 567 |
| | WORK REGULATIONS | PERSON IN CHARGE OF 566 ORDERING LIMIT OF PURCHASE | CREDIT 568 ORDER PLACING AUTHORITY |
| | ORDER RECEIVING AND SALES WORK | ORDER RECEIVED SLIP PURCHASE SLIP 569 | ACCOUNTS RECEIVABLE MANAGEMENT SALES PLAN 571 |
| | WORK REGULATIONS | PRICE BY CUSTOMER 570 COMMODITY SALES LOT | CREDIT 572 ORDER RECEIVING AUTHORITY |
| CUSTOMER 580 INFORMATION | | 581 | 582 |
| MARKETING 591 | | | |
| NETWORKING 600 | | | |
| HARDWARE | | | |

FIG. 31

KNOWLEDGE MANAGEMENT SYSTEM

COMPANY n

COMPANY B

COMPANY A

BUSINESS MODEL
(FREELY
ADAPTABLE TYPE)

MODELING OF
BUSINESS
MODEL

BUSINESS
MODEL FOR
ENTERPRISE

COMBINATION

APPLICATION
(QUICKLY
ADAPTABLE TYPE)

APPLICATION
CONFORMING TO
UNIQUE
SPECIFICATIONS

FIG. 32

EP 1 074 921 A2

INITIAL SETTING ⌒F1

DISPLAY FUNCTIONAL BLOCK
OF BUSINESS MODELING ~F2

YES
FINISH
NO

END

NO
FUNCTIONAL
BLOCK SELECTED? ⌒F3

YES

DISPLAY MENU FOR WORKSHEETS
(E.G.,SLIPS) INCLUDED IN
THE FUNCTIONAL BLOCK ~F4

YES
FINISH
NO

NO
WORKSHEET
SELECTED AND DATA
ENTERED? ⌒F5

YES

FIG. 33

BUSINESS MODEL FOR PARTS MAKER

[COMMODITY SALES AND SERVICE PURCHASER]

| CUSTOMER CORPORATION | SALES AGENCY |
|---|---|
| PRIVATE CUSTOMER | |

[CONMODITY PURCHASER AND SERVICE PURCHASER]

| CUSTOMER CORPORATION PURCHASER | SALES AGENCY PURCHASER |
|---|---|
| PRIVATE CUSTOMER ADDRESSEE | SALES AGENCY COMMODITY WAREHOUSE |

[RECOVERY SETTLEMENT AGENCY]

| RECOVERY CARD COMPANY | RECOVERY LEASE COMPANY |
|---|---|
| RECOVERY LOAN COMPANY | |

[CONSTRUCTION SITE]

| CONSTRUCTION SITE |
|---|

[EXPORT]

| IMPORTER | EXPORT SERVICE |
|---|---|
| | EXPORT WAREHOUSE |

# F I G. 34A

BUSINESS MODEL FOR PARTS MAKER

## BUSINESS MODEL

| [LEGAL SYSTEM] | [EXTERNAL ORGANIZATIONS] | | | |
|---|---|---|---|---|
| LEGAL SYSTEM | FINANCE | ADMINISTRATION | MEMBER ORGANIZATION | CORPORATE GROUP |

| CORPORATE BODY | ORGANIZATION | EMPLOYEE | TALENTED PERSON | ADVISER | CONSOLIDATED MANAGEMENT |
|---|---|---|---|---|---|

COMPANY

| [BUSINESS PLANNING] | [MANAGEMENT PLAN] | [FINANCE] | [ASSETS] |
|---|---|---|---|
| MARKETING | MANAGEMENT STRATEGY | FINANCE | CURRENT ASSETS |
| BUSINESS UNIT | BUSINESS PLAN | ACCOUNTING / PAYROLL | FIXED ASSETS |

[CASHIER]

| CASH | BANK ACCOUNT | DRAFT OR THE LIKE |
|---|---|---|

[MERCHANDISE]

| COMMODITY | SERVICE | FINANCIAL INSTRUMENT | PRODUCT | MATERIAL |
|---|---|---|---|---|

| [STORE] | [COMMODITY WAREHOUSE] | [MANUFACTURE] | |
|---|---|---|---|
| STORE | COMMODITY WAREHOUSE | PRODUCT WAREHOUSE | FACTORY |
| STORE COMMODITY WAREHOUSE | | | PRODUCTION LINE |
| STORE PROCESSING FACTORY | | | MATERIAL WAREHOUSE |

| NETWORKING | KNOWLEDGE DATA APPLICATION | DISPLAY TERM DICTIONARY | KNOWLEDGE MANAGEMENT MODEL |
|---|---|---|---|

# F I G. 34B

BUSINESS MODEL FOR PARTS MAKER

┌─────────── [SUPPLIER OR THE LIKE] ───────────┐

| SALES CONSIGNEE | PHYSICAL DISTRIBUTION CONSIGNEE |
|---|---|
| COMMODITY SUPPLIER | MATERIAL SUPPLIER |
| COMMODITY SUPPLIER WAREHOUSE | MATERIAL SUPPLIER WAREHOUSE |
| PRODUCT SUPPLIER | OUTSIDE SUPPLIER |
| PRODUCT SUPPLIER WAREHOUSE | OUTSIDE SUPPLIER MATERIAL WAREHOUSE |
| SERVICE CONSIGNEE | |
| ASSETS SUPPLIER | EXPENSE SUPPLIER |

┌─────────── [PAYMENT SETTLEMENT AGENCY] ───────────┐

| PAYMENT LEASE COMPANY | PAYMENT LOAN COMPANY |
|---|---|
| | PAYMENT LOAN COMPANY |

┌─────────── [IMPORT] ───────────┐

| IMPORT SERVICE | EXPORTER |
|---|---|
| IMPORT WAREHOUSE | |

| DISPLAY LANGUAGE SELECTION | END |
|---|---|

# F I G. 34C

56

[COMPANY MANAGEMENT]

| KNOWLEDGE MANAGEMENT MODEL | | | | | |
|---|---|---|---|---|---|
| COMPANY MANAGEMENT | FACTORY MANAGEMENT | PRODUCTION LINE | STORE MANAGEMENT | STORE FOOD PROCESSING | CORPORATE GROUP MANAGEMENT |
| COMPANY | CUSTOMER | COMMODITY | SERVICE | SUPPLIER | COMMODITY WAREHOUSE |
| MARKETING | MANAGEMENT STRATEGY | FINANCE | ACCOUNTING | CONSOLIDATED MANAGEMENT | |
| BUSINESS UNIT | PLAN | CASHIER | PAYROLL | | |
| AGREEMENT TO BE REACHED | COMMODITY ORDER TO BE RECEIVED | IN-HOUSE COMMODITY ORDER TO BE PLACED | IN-HOUSE COMMODITY ORDER TO BE RECEIVED | COMMODITY ORDER TO BE PLACED | |
| AGREEMENT REACHED | COMMODITY ORDER RECEIVED | IN-HOUSE COMMODITY ORDER PLACED | IN-HOUSE COMMODITY ORDER RECEIVED | COMMODITY ORDER PLACED | |
| | | COMMODITY ORDER TO BE PLACED BY FACTORY | COMMODITY ORDER TO BE PLACED BY STORE | | |

F I G. 35A

EP 1 074 921 A2

【COMPANY MANAGEMENT】 PROCESS MODEL FOR PARTS MAKER

| COMMODITY ORDER PLACED BY FACTORY | COMMODITY ORDER PLACED BY STORE |
|---|---|

| SALES DUTY COMMODITY STOCK | PURCHASE DUTY COMMODITY STOCK |
|---|---|

| COMMODITY STOCK |
|---|

| SERVICE ORDER TO BE RECEIVED | IN-HOUSE SERVICE ORDER TO BE PLACED | IN-HOUSE SERVICE ORDER TO BE RECEIVED | SERVICE ORDER TO BE PLACED |
|---|---|---|---|
| SERVICE ORDER RECEIVED | IN-HOUSE SERVICE ORDER PLACED | IN-HOUSE SERVICE ORDER RECEIVED | SERVICE ORDER PLACED |

| IMPORTER | EXPORT WAREHOUSE | EXPORT SERVICE | IMPORT SERVICE | IMPORT WAREHOUSE | EXPORTER |
|---|---|---|---|---|---|

| SYSTEM BUILDING | | END |
|---|---|---|

F I G. 35B

[FACTORY MANAGEMENT]

| KNOWLEDGE MANAGEMENT MODEL | | | | | |
|---|---|---|---|---|---|
| COMPANY MANAGEMENT | FACTORY MANAGEMENT | PRODUCTION LINE | STORE MANAGEMENT | STORE FOOD PROCESSING | CORPORATE GROUP MANAGEMENT |

| FACTORY | PRODUCT | MATERIAL | MANUFACTURE SUPPLIER | PRODUCT WAREHOUSE | MATERIAL WAREHOUSE |
|---|---|---|---|---|---|

| FACTORY STRUCTURE MARKETING | FACTORY STRUCTURE MANAGEMENT STRATEGY | FACTORY STRUCTURE FINANCE | FACTORY STRUCTURE ACCOUNTING | |
|---|---|---|---|---|
| FACTORY STRUCTURE BUSINESS UNIT | FACTORY STRUCTURE BUSINESS PLAN | FACTORY STRUCTURE CASHIER | FACTORY STRUCTURE PAYROLL | |
| IN-HOUSE SERIAL NUMBER ORDER TO BE RECEIVED | IN-HOUSE PRODUCT ORDER TO BE RECEIVED | IN-HOUSE COMMODITY ORDER TO BE PLACED BY FACTORY | IN-HOUSE COMMODITY ORDER TO BE RECEIVED BY FACTORY | COMMODITY ORDER TO BE PLACED |
| IN-HOUSE SERIAL NUMBER ORDER RECEIVED | IN-HOUSE PRODUCT ORDER RECEIVED | IN-HOUSE COMMODITY ORDER PLACED BY FACTORY | IN-HOUSE COMMODITY ORDER RECEIVED BY FACTORY | COMMODITY ORDER PLACED |

FIG. 36A

EP 1 074 921 A2

[FACTORY MANAGEMENT]　　PROCESS MODEL FOR PARTS MAKER

| FACTORY SALES DUTY PRODUCT STOCK | FACTORY PURCHASE DUTY PRODUCT STOCK |
|---|---|

| PRODUCT STOCK |
|---|

| PRODUCT PRODUCTION PLAN | PRODUCT PRODUCTION TO BE SPECIFIED | | IN-HOUSE MATERIAL ORDER TO BE RECEIVED | MATERIAL ORDER TO BE PLACED |
|---|---|---|---|---|
| | PRODUCT PRODUCTION SPECIFIED | | IN-HOUSE MATERIAL ORDER RECEIVED | MATERIAL ORDER PLACED |
| | PRODUCT PRODUCTION PERFORMANCE REFERENCE | | FACTORY PURCHASE DUTY MATERIAL STOCK | |
| | | | MATERIAL STOCK | |

| IMPORTER | EXPORT WAREHOUSE | EXPORT SERVICE | IMPORT SERVICE | IMPORT WAREHOUSE | EXPORTER |
|---|---|---|---|---|---|

| SYSTEM BUILDING | 🖨 | END |
|---|---|---|

FIG. 36B

EP 1 074 921 A2

KNOWLEDGE MANAGEMENT MODEL

| COMPANY MANAGEMENT | FACTORY MANAGEMENT | PRODUCTION LINE | STORE MANAGEMENT | STORE FOOD PROCESSING | CORPORATE GROUP MANAGEMENT |
|---|---|---|---|---|---|

FACTORY     PRODUCT     MATERIAL     PRODUCT SUPPLIER     MATERIAL WAREHOUSE

| PRODUCT PRODUCTION TO BE ORDERED REFERENCE | PRODUCT DEVELOPMENT | IN-HOUSE MATERIAL ORDER TO BE PLACED |
|---|---|---|
| PRODUCT PRODUCTION ORDERED REFERENCE | PROCESS RECEIPT PAYMENT | IN-HOUSE MATERIAL ORDER PLACED |
| PRODUCT PRODUCTION PERFORMANCE | PROCESS DUTY GOODS IN PROCESS STOCK | MANUFACTURE DUTY MATERIAL STOCK |
| PRODUCT STOCK | GOODS IN PROCESS STOCK | MATERIAL STOCK |

SYSTEM BUILDING     [END]

FIG. 37

EP 1 074 921 A2

[FACTORY MANAGEMENT]    PROCESS MODEL FOR PARTS MAKER

| KNOWLEDGE MANAGEMENT MODEL | | | | | |
|---|---|---|---|---|---|
| COMPANY MANAGEMENT | FACTORY MANAGEMENT | PRODUCTION LINE | STORE MANAGEMENT | STORE FOOD PROCESSING | CORPORATE GROUP MANAGEMENT |
| STORE | CUSTOMER | COMMODITY | FOOD MATERIAL | SUPPLIER | STORE COMMODITY WAREHOUSE |
| STORE ORGANIZATION MARKETING | STORE ORGANIZATION MANAGEMENT STRATEGY | STORE ORGANIZATION FINANCE | STORE ORGANIZATION ACCOUNTING | | |
| STORE ORGANIZATION BUSINESS UNIT | STORE ORGANIZATION BUSINESS PLAN | STORE ORGANIZATION CASHIER | STORE ORGANIZATION PAYROLL | | |
| STORE AGREEMENT TO BE REACHED | STORE COMMODITY ORDER TO BE RECEIVED | IN-HOUSE COMMODITY ORDER TO BE PLACED | IN-HOUSE STORE COMMODITY ORDER TO BE RECEIVED | STORE COMMODITY ORDER TO BE PLACED | |
| STORE AGREEMENT REACHED | STORE COMMODITY ORDER RECEIVED | IN-HOUSE STORE COMMODITY ORDER PLACED | IN-HOUSE STORE COMMODITY ORDER RECEIVED | STORE COMMODITY ORDER PLACED | |

F I G. 38A

【FACTORY MANAGEMENT】 PROCESS MODEL FOR PARTS MAKER

| STORE SALE DUTY COMMODITY STOCK | STORE PURCHASE DUTY COMMODITY STOCK |
|---|---|

STORE PRODUCT STOCK

| COMMODITY PROCESSING PLAN | COMMODITY PROCESSING TO BE ORDERED | | IN-HOUSE FOOD MATERIAL ORDER TO BE RECEIVED | FOOD MATERIAL ORDER TO BE PLACED |
|---|---|---|---|---|
| | COMMODITY PROCESSING ORDERED | | IN-HOUSE FOOD MATERIAL ORDER RECEIVED | FOOD MATERIAL ORDER PLACED |
| | COMMODITY PROCESSING PERFORMANCE REFERENCE | | STORE PURCHASE DUTY FOOD MATERIAL STOCK | |
| | | | FOOD MATERIAL STOCK | |

| IMPORTER | EXPORT WAREHOUSE | EXPORT SERVICE | IMPORT SERVICE | IMPORT WAREHOUSE | EXPORTER |
|---|---|---|---|---|---|

SYSTEM BUILDING   END

# FIG. 38B

EP 1 074 921 A2

[PRODUCTION LINE] PROCESS MODEL FOR PARTS MAKER

| KNOWLEDGE MANAGEMENT MODEL |
|---|

| COMPANY MANAGEMENT | FACTORY MANAGEMENT | PRODUCTION LINE | STORE MANAGEMENT | STORE FOOD PROCESSING | CORPORATE GROUP MANAGEMENT |
|---|---|---|---|---|---|

| STORE | COMMODITY | FOOD MATERIAL | STORE COMMODITY WAREHOUSE |
|---|---|---|---|

| COMMODITY PROCESSING TO BE ORDERED REFERENCE | FOOD DEVELOPMENT | IN-HOUSE FOOD MATERIAL ORDER TO BE PLACED |
|---|---|---|
| COMMODITY PROCESSING ORDERED REFERENCE | PROCESSING STEP RECEIPT PAYMENT | IN-HOUSE FOOD MATERIAL ORDER PLACED |
| PRODUCT PRODUCTION PERFORMANCE | PROCESSING DUTY FOOD MATERIAL IN PROCESS | PROCESSING DUTY FOOD MATERIAL STOCK |
| COMMODITY STOCK | FOOD MATERIAL IN PROCESS STOCK | FOOD MATERIAL STOCK |

SYSTEM BUILDING  📠  END

F I G. 39

EP 1 074 921 A2

PROCESS MODEL FOR PARTS MAKER

[PROCESS MODEL FOR PARTS MAKER]

| KNOWLEDGE MANAGEMENT MODEL | | | | | |
|---|---|---|---|---|---|
| COMPANY MANAGEMENT | FACTORY MANAGEMENT | PRODUCTION LINE | STORE MANAGEMENT | STORE FOOD PROCESSING | CORPORATE GROUP MANAGEMENT |

CORPORATE GROUP

MARKETING          MANAGEMENT STRATEGY          FINANCE                    CONSOLIDATED MANAGEMENT

BUSINESS UNIT          BUSINESS PLAN

SYSTEM BUILDING          END

# F I G. 40

【COMMODITY ORDER RECEIVED】　　　JOB MODEL

COMMODITY ORDER RECEIVING MENU

⊟···COMMODITY ORDER RECEIVING MENU
　⊟···COMMODITY RESERVATION
　　⊟···COMMODITY RESERVATION MADE BY CUSTOMER CORPORATION
　　　⊞····SLIP FOR COMMODITY RESERVATION MADE BY CUSTOMER CORPORATION
　　　┆····SLIP FOR CANCELING COMMODITY RESERVATION
　　　　MADE BY CUSTOMER CORPORATION
　　　⊞····SLIP FOR ACKNOWLEDGING THE RECOVERY OF THE DEPOSIT FOR
　　　　COMMODITY RESERVATION MADE BY CUSTOMER CORPORATION

　　　⊞····SLIP FOR ORDER PLACED FOR COMMODITY BY SALES AGENCY
　　　┆····SLIP FOR SPECIFYING THE DELIVERY OF GOODS TO SALES AGENCY
　　　┆····SLIP FOR THE DELIVERY OF GOODS TO SALES AGENCY
　　　┆····SLIP FOR REPORTING THE DELIVERY OF GOODS TO
　　　　SALES AGENCY OF DISTRIBUTION SALES ORGANIZATION
　　　┆····SLIP FOR DEMANDING SALES FROM SALES AGENCY
　　　⊞····SLIP FOR MANAGING THE RECOVERY OF SALES FROM SALES AGENCY
　　　⊞····SLIP FOR ACKNOWLEDGING THE RECOVERY OF SALES FROM SALES AGENCY

| DEVELOPED DISPLAY | REDUCED DISPLAY | SCREEN DISPLAY |

END

FIG. 41

EP 1 074 921 A2

【COMMODITY ORDER PLACED】          JOB MODEL

## COMMODITY ORDER PLACING MENU

⊟··· COMMODITY ORDER PLACING MENU
  ⊟···COMMODITY ORDER PLACED TO COMMODITY SUPPLIER
    ⊟··· COMMODITY ORDER PLACING SLIP TO COMMODITY SUPPLIER
      ···· SCHEDULED RECEIPT SLIP FOR ORDER FOR
      GOODS PLACED TO COMMODITY SUPPLIER

···· SLIP FOR RECEIVING GOODS FROM COMMODITY EXPORTER
⊟··· SLIP FOR DEMANDING PURCHASE OF GOODS FROM COMMODITY EXPORTER
  ···· SLIP FOR ACKNOWLEDGING PAYMENT FOR
  PURCHASE OF GOODS TO COMMODITY EXPORTER
⊟··· COMMODITY PURCHASE DEMANDING SLIP FROM BILL
OF CREDIT BANK TO COMMODITY EXPORTER
  ···· COMMODITY PURCHASE ACKNOWLEDGING SLIP
  FORM COMMODITY EXPORTER TO BILL OF CREDIT BANK
⊟··· COMMODITY PURCHASE DEMANDING SLIP FROM
COLLECTION BANK TO COMMODITY EXPORTER
  ···· COMMODITY PURCHASE PAYMENT ACKNOWLEDGING
  SLIP FROM COMMODITY EXPORTER TO COLLECTION BANK

| DEVELOPED DISPLAY | REDUCED DISPLAY | | SCREEN DISPLAY |

🖨 | END

# FIG. 42

EP 1 074 921 A2

[COMMODITY STOCK]                    JOB MODEL

COMMODITY STOCK MENU

⊟┄ COMMODITY STOCK MENU
    ⊟┄ COMMODITY WAREHOUSE STOCK
        ⊟┄SLIP
           ┝┄ SLIP FOR STORING GOODS IN COMMODITY
                WAREHOUSE FROM COMMODITY SUPPLIER

        ⊟┄FORM
           ┝┄ STOCK REFERENCE TO COMMODITY SUPPLIER'S COMMODITY WAREHOUSE
           ┝┄ STOCK REFERENCE TO BUILDING OF COMMODITY
                SUPPLIER'S COMMODITY WAREHOUSE
           ┝┄ STOCK REFERENCE TO DEPOSITORY OF COMMODITY
                SUPPLIER'S COMMODITY WAREHOUSE
           ┝┄ COMPUTING STOCK IN COMMODITY SUPPLIER'S COMMODITY WAREHOUSE
           ┝┄ COMPUTING STOCK IN BUILDING OF COMMODITY
                SUPPLIER'S COMMODITY WAREHOUSE
           ┕┄ COMPUTING STOCK IN DEPOSITORY OF SUPPLIER'S COMMODITY WAREHOUSE

| DEVELOPED DISPLAY | REDUCED DISPLAY | SCREEN DISPLAY |

END

# FIG. 43

EP 1 074 921 A2

| FINANCE MENU |
|---|

⊟··FINANCE MENU　　　　　　　　　　　　　　　　　　　　　　　　　　　　　　▲
　　⊟··RECOVERY OF ACCOUNTS RECEIVABLE
　　　　┊···REFERENCE TO ACCOUNTS RECEIVABLE
　　　　┊···REFERENCE TO SCHEDULED RECOVERY OF ACCOUNTS RECEIVABLE
　　　　┊···REFERENCE TO MANAGEMENT OF RECOVERY OF ACCOUNTS RECEIVABLE
　　　　└···REFERENCE TO ACKNOWLEDGMENT OF RECOVERY OF ACCOUNTS RECEIVABLE
　　⊟··ORDERING PAYMENT OF ACCOUNTS PAYABLE
　　　　⊟··ORDERING PAYMENT OF GOODS PURCHASED
　　　　　　⊟··ORDERING PAYMENT OF CASH

　　⊞··ALLOWANCE
　　⊞··SHARE OF PROFITS
　　⊞··LEASE DEBT MANAGEMENT
　　⊞··L/C MANAGEMENT
　　⊞··EXCHANGE
　　　　└···DRAFT MANAGEMENT
　　⊞··FUND MANAGEMENT

| DEVELOPED DISPLAY | REDUCED DISPLAY | | SCREEN DISPLAY |
|---|---|---|---|

　　　　　　　　　　　　　　　　　　　　　　　　　　　　　　　⊟ | END

FIG. 44

EP 1 074 921 A2

## ACCOUNTING MENU

⊟··· ACCOUNTING MENU
 ┊··· ACCOUNTING YEAR
 ┊··· ACCOUNTING SLIP NUMBERING RULES
 ⊟··· ACCOUNTING STANDARDS
      ⊟··· STANDARD ACCOUNT TITLE
           ⊟··· GENERAL CLASSIFICATION OF STANDARD ACCOUNT TITLE
                 ⊟··· MEDIUM CLASSIFICATION OF STANDARD ACCOUNT TITLE
                      ⊟··· SPECIFIC CLASSIFICATION OF STANDARD ACCOUNT TITLE

                  ┊··· FINE CLASSIFICATION OF STANDARD
                      SUBSIDIARY ACCOUNT TITLE
 ┊··· SUBSIDIARY ACCOUNT TITLE
 ┊··· JOURNAL SLIP NUMBERING RULES
 ┊··· ACCOUNT TITLE BALANCE
 ┊··· SUBSIDIARY ACCOUNT TITLE
 ┊··· ACCOUNT TITLE BALANCE BY ORGANIZATION
 ┊··· SUBSIDIARY ACCOUNT TITLE BALANCE BY ORGANIZATION

| DEVELOPED DISPLAY | REDUCED DISPLAY | | SCREEN DISPLAY |

END

## FIG. 45

EP 1 074 921 A2

[CONSOLIDATED CLOSING]          JOB MODEL

CONSOLIDATED CLOSING MENU

⊟·· CONSOLIDATED CLOSING MENU
    ⊟·· ACCOUNTING MENU FOR PARENT COMPANY OF CONSOLIDATED ACCOUNTING
       ⊟·· ACCOUNTING STANDARDS OF CONSOLIDATED ACCOUNTING
         ··· ACCOUNTING YEAR
         ⊞·· SUBSIDIARY COMPANY

         ⊞·· SYSTEM OF ACCOUNT TITLES FOR CURRENT CONSOLIDATED ACCOUNTING
         ⊞·· CORRESPONDENCE BETWEEN THE SUBSIDIARY COMPANY'S ACCOUNT TITLES
             AND THE PARENT'S COMPANY ACCOUNT TITLES IN CURRENT
             CONSOLIDATED ACCOUNTING
         ⊞·· BEGINNING BALANCE OF SUBSIDIARY COMPANY
             IN CURRENT CONSOLIDATED ACCOUNTING
         ⊞·· ACCOUNTING RULES IN CURRENT CONSOLIDATED ACCOUNTING
     ⊞·· CLERICAL WORK OF CONSOLIDATED CLOSING FOR
         SUBSIDIARY COMPANIES IN CONSOLIDATED ACCOUNTING
         ⊞·· PREPARATION FOR CONSOLIDATED CLOSING FOR SUBSIDIARY COMPANIES
         ⊞·· CLOSING REPORT ABOUT CONSOLIDATED COMPANIES

| DEVELOPED DISPLAY | REDUCED DISPLAY | | SCREEN DISPLAY |

END

# FIG. 46

EP 1 074 921 A2